(19) Europäisches Patentamt

European Patent Office

Office européen des brevets

(11) **EP 1 081 628 A1**

(12) **EUROPEAN PATENT APPLICATION**
published in accordance with Art. 158(3) EPC

(43) Date of publication:
07.03.2001 Bulletin 2001/10

(51) Int. Cl.[7]: **G06F 19/00**, G07F 19/00

(21) Application number: 99900671.1

(86) International application number:
PCT/JP99/00282

(22) Date of filing: 22.01.1999

(87) International publication number:
WO 99/46715 (16.09.1999 Gazette 1999/37)

(84) Designated Contracting States:
DE GB

(30) Priority: 13.03.1998 JP 6274498

(71) Applicants:
• FUJITSU LIMITED
Kawasaki-shi, Kanagawa 211-8588 (JP)
• The Sakura Bank, Ltd.
Chiyoda-ku, Tokyo 102-0074 (JP)

(72) Inventors:
• MORI, Nobuyuki,
Fujitsu Limited
Kawasaki-shi, Kanagawa 211-8588 (JP)
• MORITA, Michihiro,
The Sakura Bank, Limited
Tokyo 102-0074 (JP)

(74) Representative:
Mohun, Stephen John
Haseltine Lake & Co.,
Imperial House,
15-19 Kingsway
London WC2B 6UD (GB)

(54) **PAYMENT SYSTEM AND ELECTRONIC PURSE UNIT**

(57) An account data management means (2) stores and maintains data about a plurality of accounts that a single customer has opened at the financial institution processors (1a) and (1b). A priority setting means (3) determines a priority level to each account managed in the account data management means (2). A target account selection means (4) is responsive to a service request, which requests a manipulation of monetary data held in an account of the customer. To accomplish the requested service, the target account selection means (4) successively selects target accounts from among the established customer accounts, in descending order of the priority levels. A monetary data manipulating means (5) successively manipulates the target accounts selected by the target account selection means (4), according to the service request.

FIG. 1

EP 1 081 628 A1

**Description**

Technical Field

The present invention relates to a payment system which manages payments, an electronic wallet device which transfers monetary data, a financial institution processor which manages customer account information held at a financial institution, an electronic wallet management unit which supports transfer of monetary data between an electronic wallet device and other device, and a computer-readable storage medium storing an account management program which manages accounts at a plurality of financial institution processors. More particularly, the present invention relates to a payment system, an electronic wallet device, a financial institution processor, and an electronic wallet management unit which manage and use a plurality of accounts as an organized group, as well as to a computer-readable storage medium storing an account management program designed therefor.

Background Art

There are many kinds of financial institutions today, including banks and credit companies, which provide their customers with a wide diversity of services. Because of their specialties, most customers deal with a plurality of such financial institutions. Actually, many people have their accounts at two or more different banks. It is not unusual that one customer has several accounts in a single bank for different purposes, such as ordinary deposits and time deposits. When he/she needs some amount of cash, the customer may wish to withdraw it from one of his/her bank accounts, choosing the one that is considered to be the most favorable to him/her. For example, he/she may choose an account with the lowest interest rate when withdrawing money. On the other hand, when he/she has some cash to deposit, the best choice would be such a bank account that provides the highest interest rate.
However, it is troublesome for most customers to determine which account is the most beneficial to them each time they make a deposit or withdrawal of money. Another troublesome thing for the customers is to maintain the balance of their direct debit accounts being used for automated loan repayments or regular payments of public utility charges. Since direct debit services are designed to withdraw money from a particular pre-authorized account, a shortage of deposit in that account would result in a failed payment, even if the customer had sufficient funds in other bank accounts. Such failure in the payment of public utility charges would cause various inconveniences to the customers. Suppose, for example, that a person happened to fail in the payment of telephone charges. If this accidental nonpayment led to a cutoff of service, he/she would suffer a great difficulty in everyday life.

Disclosure of the Invention

Taking the above into consideration, it is an object of the present invention to provide a payment system which enables a customer to make a deposit or withdrawal to/from advantageous accounts that are selected from a group of customer accounts.
It is another object of the present invention to provide an electronic wallet device which sends a deposit or withdrawal request to the most favorable account selected from among a plurality of customer accounts.
It is still another object of the present invention to provide a financial institution processor which manages and uses a plurality of accounts in an organized way, including its local customer accounts and those at other financial institutions, to enable customers to deposit or withdraw their money to/from their most favorable accounts.
It is yet another object of the present invention to provide an electronic wallet management unit which uses a plurality of accounts in an organized way to enable customers to deposit or withdraw their money to/from their most favorable accounts.
It is a further object of the present invention to provide a computer readable medium storing an account management program which causes a computer to manage and use a plurality of accounts in an organized way so that customers will be able to deposit or withdraw their money to/from their most favorable accounts.
To accomplish the above objects, according to the present invention, there is provided a payment system which manages accounts held at a plurality of financial institution processors. This payment system comprises the following elements: an account data management means for managing data about a plurality of accounts that a single customer opened at the plurality of financial institution processors; a priority setting means for determining priority levels of the plurality of accounts; a target account selection means for determining a target account by selecting one of the accounts that has a higher priority level, in response to a service request asking for a manipulation of monetary data that is owned by the customer; and a monetary data manipulating means for manipulating, according to the service request, the monetary data held in the target account that has been selected by the target account selection means.
According to the above payment system, the account data held in a plurality of financial institution processors are managed by the account data management means, and the priority setting means gives an appropriate priority level to each account. When a service request is received, the target account selection means selects such a customer account that has a higher priority level, and nominates that selected account as a target account. The monetary data manipulating means then manipulates, according to the received service request, monetary data held in the target account selected by the target account selection means.

The present invention also provides an electronic wallet device which transfers monetary data. This electronic wallet device comprises the following elements: an account data management means for managing data about a plurality of accounts that an owner of the electronic wallet device opened at the plurality of financial institution processors; a priority setting means for determining priority levels of the plurality of accounts; a target account selection means for determining a target account by selecting one of the accounts that has a higher priority level, in response to a service request asking for a manipulation of monetary data held in the accounts of the owner; and a monetary data manipulation requesting means for sending an execution request to one of the financial institution processors which holds the target account selected by the target account selection means, the execution request asking for execution of the manipulation specified in the service request.

According to the above electronic wallet device, the accounts that the wallet owner has opened at a plurality of financial institution processors are managed by the account data management means. The priority setting means gives appropriate priority levels to those accounts. Upon receipt of a service request asking for a manipulation of monetary data held in the owner's accounts, the target account selection means selects such a customer account that has a higher priority level, and nominates that selected account as a target account. The monetary data manipulation requesting means then sends an execution request to one of the financial institution processors which holds the target account selected by the target account selection means. This execution request makes the receiving financial institution processor execute the manipulation specified in the service request.

Further, present invention provides a financial institution processor which manages customer account information at a financial institution. This financial institution processor comprises the following elements: an account data management means for managing data about a plurality of accounts that a single customer opened at the financial institution processor itself, as well as at other financial institution processors; a priority setting means for determining priority levels of the plurality of accounts; a target account selection means for determining a target account by selecting one of the accounts that has a higher priority level, in response to a service request asking for a manipulation of monetary data that is owned by the customer; a monetary data manipulating means for manipulating, according to the service request, the monetary data held in the target account that has been selected by the target account selection means, if the selected target account is held at the financial institution processor itself; and a monetary data manipulation requesting means for sending an execution request to one of the other financial institution processors which holds the target account selected by the target account selection means, the execution request asking for execution of the manipulation specified in the service request, if the selected target account is held at the other financial institution processors.

According to the above financial institution processor, the account data management means manages data about the accounts that a customer has opened at a plurality of financial institution processors. The priority setting means gives appropriate priority levels to those accounts. Upon receipt of a service request asking for a manipulation of monetary data held in the customer accounts, the target account selection means selects such an account that has a higher priority level and nominates it as a target account. If the selected target account is held at the financial institution processor itself, the monetary data manipulating means manipulates the monetary data held in the selected target account according to the service request. If the selected target account is held at the other financial institution processors, the monetary data manipulation requesting means sends an execution request to one of the other financial institution processors which holds the selected target account. This execution request makes the receiving financial institution processor execute the manipulation specified in the service request.

In addition, the present invention provides a financial institution processor which manages customer account information held in a specific financial institution, being coupled to a monetary data management unit managing data about a plurality of accounts that an account holder opened at a plurality of financial institution processors. This financial institution processor comprises a monetary data manipulating means, responsive to a service request asking for a manipulation of an account that is owned by a specific customer, for manipulating the account to execute the service request.

According to the above financial institution processor, the monetary data management unit issues a service request asking for a manipulation of an account that is owned by a specific customer. When this service request is received, the monetary data manipulating means manipulates the specified account to execute the service request. The monetary data management unit refers to the aforementioned financial institution or electronic wallet device, or an electronic wallet management unit to be described in the next paragraph.

Moreover, the present invention provides an electronic wallet management unit which supports transfer of monetary data between an electronic wallet device and other devices. This electronic wallet management unit comprises the following elements: an account data management means for managing data about a plurality of accounts that an owner of the electronic wallet device opened at the plurality of financial institution processors; a priority setting means for determining priority levels of the plurality of accounts; a target account selection means for determining a target account by selecting one of the accounts that has a higher priority level, in response to a service request asking for a manipulation of monetary data held in the plurality of accounts; and a monetary data manipulation requesting means for sending an execution request to one of the financial institution processors which holds the target account selected by the target account selection means, the execution request asking for execution of the manipulation specified in the service request.

According to the above electronic wallet management unit, the accounts that the wallet owner has opened at a plurality of financial institution processors are managed by the account data management means. The priority setting means gives appropriate priority levels to those accounts. Upon receipt of a service request asking for a manipulation of monetary data held in the accounts, the target account selection means selects such an account that has a higher priority level and nominates it as a target account. The monetary data manipulation requesting means then sends an execution request to one of the financial institution processors which holds the target account selected by the target account selection means. This execution request makes the receiving financial institution processor execute the manipulation specified in the service request.

Furthermore, the present invention provides a computer-readable medium storing an account management program which manages customer accounts held at a plurality of financial institution processors. This program causes a computer to function as: an account data management means for managing data about a plurality of accounts that a single customer opened at the plurality of financial institution processors; a priority setting means for determining priority levels of the plurality of accounts; a target account selection means for determining a target account by selecting one of the accounts that has a higher priority level, in response to a service request asking for a manipulation of monetary data that is owned by the customer; and a monetary data manipulating means for manipulating, according to the service request, the monetary data held in the target account that has been selected by the target account selection means.

A computer executes the account management program stored in the above medium. The computer then functions as the following means: an account data management means for managing data about a plurality of accounts that a single customer opened at the plurality of financial institution processors; a priority setting means for determining priority levels of the plurality of accounts; a target account selection means for determining a target account by selecting one of the accounts that has a higher priority level, in response to a service request asking for a manipulation of monetary data that is owned by the customer; and a monetary data manipulating means for manipulating, according to the service request, the monetary data held in the target account that has been selected by the target account selection means.

Brief Description of the Drawings

FIG. 1 shows the principle of the present invention;
FIG. 2 is a block diagram of a system in which the present invention is embodied;
FIG. 3 is a diagram which shows data stored in a memory area of an electronic wallet device;
FIG. 4 is a diagram which shows the details of financial institution data;
FIG. 5 is a diagram which shows the details of credit card company data;
FIG. 6 is a diagram which shows the details of house card company data;
FIG. 7 is a diagram which shows an example of account management status flags;
FIG. 8 is the first half of a flowchart of a fund withdrawing process;
FIG. 9 is the second half of the same flowchart;
FIG. 10 is a flowchart which shows the details of a withdrawal command entry process;
FIG. 11 is a diagram which shows an example of a withdrawal command menu;
FIG. 12 is a flowchart which shows a process of confirming the continuation of account selection;
FIG. 13 is an example screen shot where a result report is displayed, together with a confirmation dialog for continuation;
FIG. 14 is a flowchart which shows a process of updating electronic wallet data;
FIG. 15 is a flowchart which shows a process of confirming the amount of required funds;
FIG. 16 is a flowchart which shows a process of organized account group registration;
FIG. 17 is a flowchart which shows the details of a registration method selection routine;
FIG. 18 is an example screen shot of a registration method selection menu;
FIG. 19 is a flowchart which shows the details of a manual account registration routine;
FIG. 20 is an example screen shot of a dialog for viewing account parameters and determining whether to add the account to an organized account group;
FIG. 21 is a flowchart which shows the details of a manual priority setting routine;

FIG. 22 is an example screen shot of a dialog for viewing account parameters and entering priority levels;

FIG. 23 is a flowchart which shows the details of an automated priority setting routine;

FIG. 24 is a diagram which shows an example of criteria for automated priority setting;

FIG. 25 is an example screen shot of a dialog for viewing and confirming the setup;

FIG. 26 is a flowchart which shows the details of a host-assisted priority setting routine;

FIG. 27 is a flowchart which shows the details of an automated account registration and priority setting routine;

FIG. 28 is a flowchart which shows the details of a host-assisted account registration and priority setting routine;

FIG. 29 is a diagram which shows how a financial institution processor selects a source account;

FIG. 30 is the first part of a flowchart showing a process of best source account selection;

FIG. 31 is the second part of the same flowchart;

FIG. 32 is the third part of the same flowchart;

FIG. 33 is the fourth part of the same flowchart; and

FIG. 34 is a diagram which shows a payment procedure including a provisional payment using an electronic check.

Best Mode for Carrying Out the Invention

Preferred embodiments of the present invention will be described below with reference to the accompanying drawings.

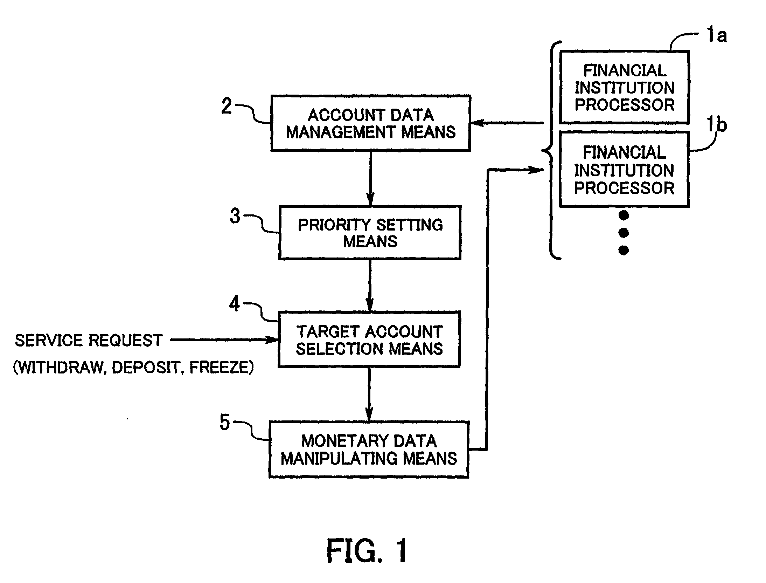

FIG. 1 shows the principle of the present invention. A plurality of financial institution processors 1a and 1b manage various accounts at each financial institution. An account data management means 2 stores and maintains data about a plurality of accounts that a single customer opened at the financial institution processors 1a and 1b. Here, each account is characterized by the following parameters: a collection of identifiers (e.g., bank name, branch office name, account number) to distinguish the account from others, account type (e.g., ordinary deposit account, checking account, time deposit account), interest rate, and current balance. A priority setting means 3 assigns an appropriate priority level to each of the accounts managed in the account data management means 2. Preferably, the priority setting means 3 determines the priority level of an account by evaluating how advantageous the account is to the customer. More specifically, an account with a low interest rate is less beneficial to the customer in terms of earning. Therefore, such a low-interest account will be granted a higher priority level when a fund withdrawal operation is intended. To the contrary, an account with a higher interest rate will gain a higher priority level when a fund depositing operation is intended.

A target account selection means 4 responds to a service request, which requests some manipulation of monetary data held in an account owned by the customer. To accomplish the requested service, the target account selection means 4 selects one or more target accounts from among the customer's accounts, in descending order of priority levels. The service request initiates either of the following three operations: withdraw funds from an account, deposit funds into an account, and freeze funds in an account. A fund freezing request may be received when the customer has drawn an electronic check to make a provisional payment, i.e., to freeze a part of his/her deposit equivalent to the amount to be paid. A monetary data manipulating means 5 successively manipulates the target accounts selected by the target account selection means 4, to fulfil the service request.

In the above payment system, the customer is assumed to have two or more accounts at different financial institutions. The customer, however, does not have to designate a specific account when making a deposit or withdrawal, since the proposed system chooses an appropriate account(s) which is considered to be the most advantageous to him.

A more specific embodiment of the present invention will now be described below.

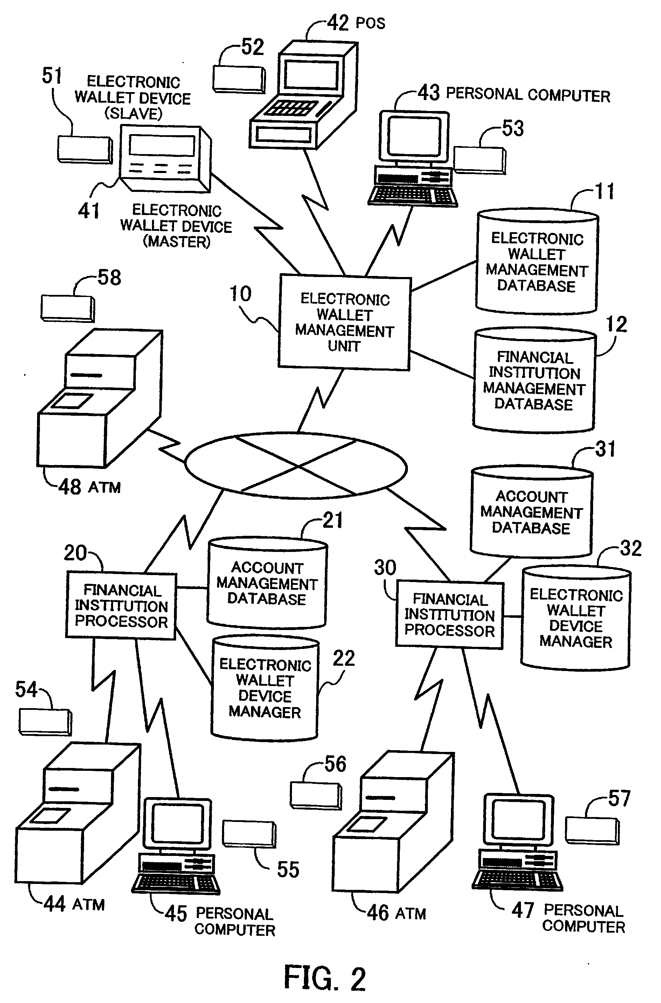

FIG. 2 is a block diagram of a system in which the present invention is embodied. The payment system of the present invention comprises an electronic wallet management unit 10 and an a plurality of financial institution processors 20 and 30, which play a central role in the system. The electronic wallet management unit 10 and financial institution processors 20 and 30 are interconnected by a network.

The electronic wallet management unit 10 is equipped with an electronic wallet management database 11 and a financial institution management database 12. The electronic wallet management database 11 stores backup data and other information downloaded from electronic wallets. The financial institution management database 12, on the other hand, stores data about the financial institution processors on the network.

The financial institution processor 20 comprises an account management database 21 and an electronic wallet device manager 22. Likewise, the other financial institution processor 30 comprises an account management database 31 and an electronic wallet device manager 32. The account management databases 21 and 31 maintain data about customer accounts, such as the amount of deposits. The electronic wallet device managers 22 and 32 store information about electronic wallet devices issued by their respective financial institutions.

An electronic wallet device 41, a point of sale (POS) terminal 42, and a personal computer 43 are linked to the electronic wallet management unit 10. Automatic teller machines (ATM) 44 and 46 and personal computers 45 and 47 are linked to the financial institution processors 20 and 30, respectively. In addition to the electronic wallet management unit 10 and financial institution processors 20 and 30, there is an ATM 48 directly connected to the network. The above ATMs and personal computers are each equipped with an interface to electronic wallet devices 51 to 58, which are implemented in the form of IC cards.

The electronic wallet devices 41 and 51 to 58 manage data of every account that the customer has opened at the financial institution processors (e.g., banks and credit card companies). Each account is given an appropriate priority level which takes effect when the monetary data is moved to or from that account. It should be noted that the priority level used in depositing operations is different from that used in withdrawal operations. The electronic wallet devices 41 and 51 to 58 determine which account to use in each deposit or withdrawal session, based on the priority levels being set to the individual accounts.

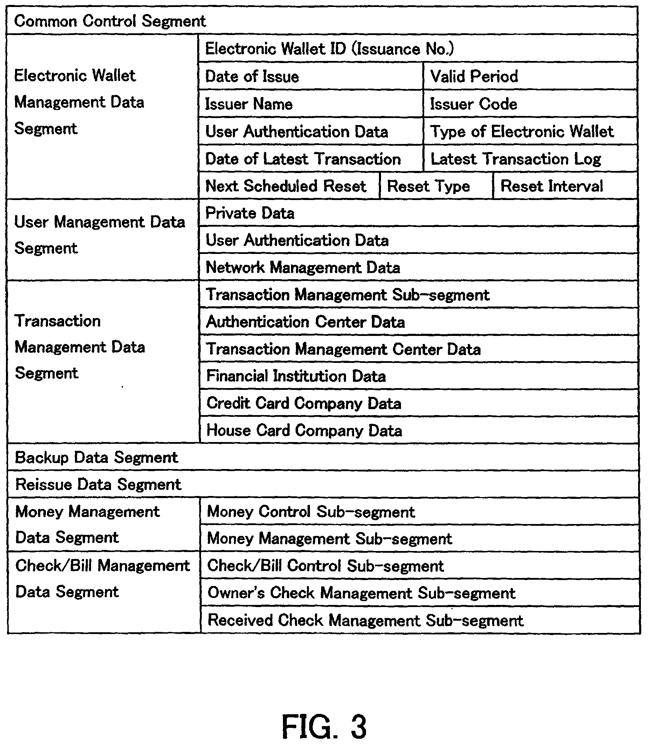

To make the above functions possible, the electronic wallet devices 41 and 51 to 58 store various data items. FIG. 3 shows such data stored in a memory of an electronic wallet device, the details of which will be provided below.

The "Common Control" segment contains basic control parameters necessary for the electronic wallet device to operate. More specifically, this segment holds memory addresses of various data segments and sub-segments described below.

The "Electronic Wallet Management Data" segment contains the following information fields: "Electronic Wallet ID" (Issuance No.), "Date of Issue," "Valid Period," "Issuer Name," "Issuer Code," "User Authentication Data" (e.g., passwords), "Type of Electronic Wallet," "Date of Last Transaction," "Last Transaction Log," "Next Scheduled Reset," "Reset Type," and "Reset Interval." More specifically, the Electronic Wallet ID field contains an identification code that is assigned to each electronic wallet device when it is issued. The Date of Issue field indicates when this electronic wallet device was issued. The Issuer Name field shows the name of the establishment that issued this electronic wallet device. The Issuer Code field contains the identification code of the issuer. The User Authentication Data field contains a special character string that only the owner of the electronic wallet device knows, which is used to authenticate the user of the electronic wallet device. The Type of Electronic Wallet field indicates the current operation mode and I/O mode being set to the electronic wallet. While electronic wallet systems are designed for electronic cash transactions and settlement account (checks and bills) transactions, each individual electronic wallet device may be restricted to either of those two kinds of transactions, or allowed to handle both kinds of transactions, depending on its current operation mode setup. The I/O mode determines whether to enable input/output functions. The Date of Last Transaction field indicates the date and time of the most recently conducted transaction, including inquiry, and the Last Transaction Log field holds a log record of that transaction. The Next Scheduled Reset field indicates the next scheduled date for a regular reset operation. The Reset Type field determines whether the reset operation is to be performed automatically or manually (i.e., through interactive key operations). The Reset Interval field provides the interval of regular reset operations.

The "User Management Data" segment is divided into the following three parts: "Private Data" sub-segment, "User Authentication Data" sub-segment, and "Network Management Data" sub-segment. More specifically, the Private Data sub-segment contains the owner's private information, including his/her name, sex, and address. The User Authentication Data sub-segment contains digital signature or like information. The Network Management Data sub-segment contains network address information and the owner's identification code.

The "Transaction Management Data" segment is divided into the following parts: "Transaction Management" sub-segment, "Authentication Center Data," "Transaction Management Center Data," "Financial Institution Data," "Credit Card Company Data," and "House Card Company Data." The Transaction Management sub-segment contains the memory addresses of various information resources necessary for transaction management. The Authentication Center Data sub-segment contains the name and identification code of an authentication center. The Transaction Management Center Data sub-segment contains the name and identification code of a transaction management center. The Financial Institution Data sub-segment contains the name and identification code of a financial institution. The Credit Card Company Data sub-segment contains the name and identification code of a credit card company. The House Card Company Data sub-segment contains the name and identification code of a house card company.

The "Backup data" segment stores information that is necessary to back up the data stored in the electronic wallet device. It includes backup conditions (e.g., interval for regular backup) and history records of backup operations performed in the past, for example.

The "Reissue Data" segment stores history records of re-issuance of electronic wallet devices resulting from loss, failure, or any other reason. More specifically, it includes the number of past instances of re-issuance and the date of the latest re-issuance.

The "Money Management Data" segment comprises "Money Control" and "Money Management" sub-segments. The Money Control sub-segment contains information such as the present date and sub-passwords. The Money Management sub-segment shows the current balance of the electronic money account, as well as containing some criteria to be considered in payment transactions (e.g., whether to perform user authentication).

The "Check/Bill Management Data" segment comprises the following sub-segments: "Check/Bill Control," "Owner's Check Management," and "Received Check Management." The Check/Bill Control sub-segment contains the memory addresses of various information resources necessary for managing checks and bills. The Owner's Check Management sub-segment contains the name of a financial institution where the owner has his/her checking account, as well as the credit limit given to the owner. The Received Check Management sub-segment contains information about received checks, including the name of the financial institution that issued each check and the face value of that check.

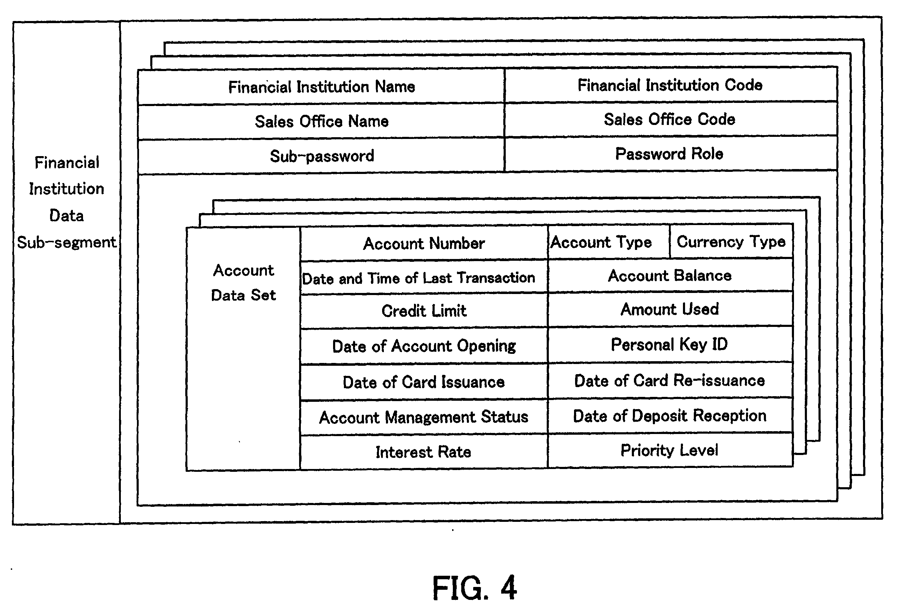

FIG. 4 shows the details of the Financial Institution Data sub-segment. This sub-segment stores a collection of records about the financial institutions concerned. For each individual financial institution, the following data items are recorded:

- Financial Institution Name
- Financial Institution Code
- Sales Office Name
- Sales Office Code
- Sub-Password
- Password Role
- Account Data Sets (one set for each account)

The "Financial Institution Name" is the name of a financial institution where the wallet owner holds accounts, and the "Financial Institution Code" is the identification code of that financial institution. The "Sales Office Name" is the name of a sales office where the wallet owner opened the account, and the "Sales Office Code" is the identification code of that sales office. The "Sub-Password" is a character string that only the wallet owner knows. The "Password Role" describes in what situations the sub-password is supposed to be used.

Each account data set contains the following parameters:

- Account Number
- Account Type
- Currency Type
- Date and Time of Last Transaction
- Account Balance
- Credit Limit
- Amount Used
- Date of Account Opening
- Personal Key ID
- Date of Card Issuance
- Date of Card Re-issuance
- Account Management Status
- Date of Deposit Reception
- Interest Rate
- Priority Level

The "Account Number" is a number given by the financial institution to identify the account. The "Account Type" shows the type of the account (e.g., deposit account, checking account, time deposit account). The "Currency Type" indicates which currency the account deals with. The "Date and Time of Last Transaction" records when the account was last used for deposit or withdrawal. The "Account Balance" indicates the amount of money remaining in the account. The "Credit Limit" is determined on the basis of the creditworthiness the account holder. Higher limits will be granted to more creditworthy customers. The "Date of Account Opening" indicates the date when the account was opened. The "Personal Key ID" is an identifier used in an authentication using digital signatures. The "Date of Card Issuance" shows the data when a cash card of the account was issued. The "Date of Card Re-issuance" is the date when a cash card of the account was reissued for some reason. The "Account Management Status" contains various flags indicating, for example, whether the account is included in an organized account group. The term "organized account group" refers to a group of accounts which may be nominated as the source or destination accounts in a deposit or withdrawal session. This mode of operation is initiated by a service request that specifies the use of an organized account group (i.e., requesting the system to choose source or destination accounts with higher priority levels). The "Date of Deposit Reception" shows the date when a regular fund transfer (e.g., salary deposit) occurs to the account. The "Interest Rate" shows the annual rate of interest set to the account. The "Priority Level" shows the priority of the account when it is used as a member of an organized account group. Note that each account has different priority levels in withdrawal, deposit, and freezing operations.

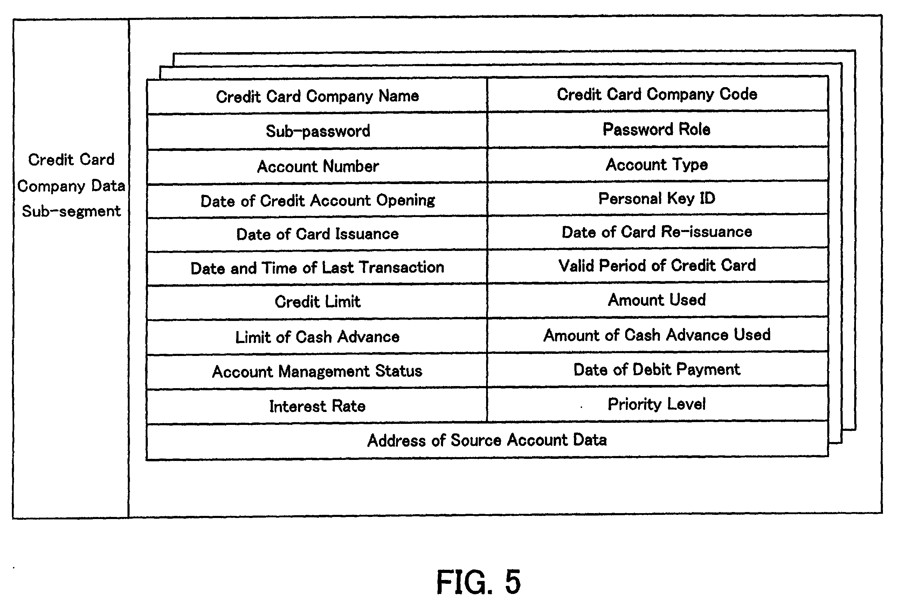

FIG. 5 shows the details of the credit card company data sub-segment. This sub-segment stores a collection of records about credit card companies. For each individual credit card company, the following parameters are recorded:

- Credit Card Company Name
- Credit Card Company Code
- Sub-Password
- Password Role
- Account Number
- Account Type
- Date of Credit Account Opening
- Personal Key ID
- Date of Card Issuance
- Date of Card Re-issuance
- Date and Time of Last Transaction
- Valid Period of Credit Card
- Credit Limit
- Amount Used
- Limit of Cash Advance
- Amount of Cash Advance Used
- Account Management Status
- Date of Debit Payment
- Interest Rate
- Priority Level
- Address of Source Account Data

The "Credit Card Company Name" is the name of a credit card company where the wallet holder has a credit account, and the "Credit Card Company Code" is the identifier of that company. The "Sub-Password" is a character string that only the wallet owner knows. The "Password Role" describes in what situations the sub-password is supposed to be used. The "Account Number" and "Account Type" are the identification number and type of the account of interest. The "Date of Credit Account Opening" indicates the date when the account was opened. The "Personal Key ID" is an identifier used in an authentication using digital signatures. The "Date of Card Issuance" shows the data when a credit card of the account was issued. The "Date of Card Re-issuance" is the date when a cash card of the account was reissued for some reason. The "Date and Time of Last Transaction" records when the account was last used for payments. The "Valid Period of Credit Card" indicates the term of validity of the credit card issued to the wallet owner. The "Credit Limit" is the maximum amount that the owner can owe on credit, which is determined on the basis of how creditworthy he/she is. The "Amount Used" shows how much the wallet owner have paid by a credit card. The "Limit of Cash Advance" defines how much cash can be withdrawn from the credit account of interest. The "Amount of Cash Advance Used" indicates how much the wallet owner have used the cash advance service. The "Account Management Status" shows some properties of the account, including whether the account is a member of an organized account group. The "Date of Debit Payment" is the date when a direct debit withdrawal is made from the customer's bank account. The "Interest Rate" shows the annual rate of interest of that account. The "Priority Level" is referenced when the account is selected as a member of an organized account group. The "Address of Source Account Data" serves as an address pointer to relevant financial institution data describing the source account from which money will be withdrawn.

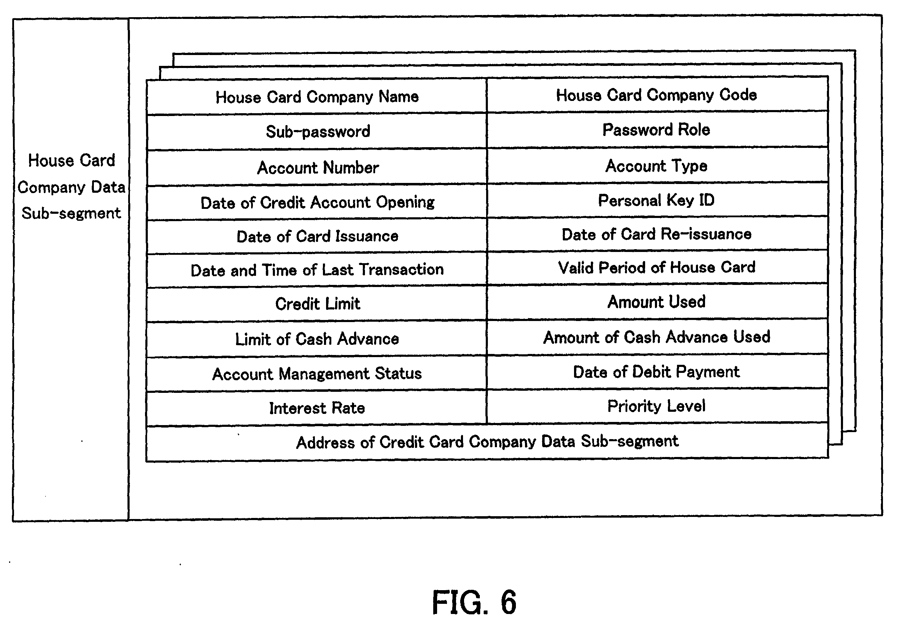

FIG. 6 shows the details of the house card company data sub-segment. This sub-segment stores a collection of records about house card companies. For each house card company, the following parameters are recorded:

- House Card Company Name
- House Card Companies Code
- Sub-password
- Password Role
- Account Number
- Account Type
- Date of Credit Account Opening
- Personal Key ID
- Date of Card Issuance
- Date of Card Re-issuance

- Date and Time of Last Transaction
- Valid Period of House Card
- Credit Limit
- Amount Used
- Limit of Cash Advance
- Amount of Cash Advance Used
- Account Management Status
- Date of Debit Payment
- Interest Rate
- Priority Level
- Address of Credit Card Company Data Sub-segment

The meanings of the above parameters are similar to those described in the Credit Card Company Data sub-segment of FIG. 5, except for the last item. The parameter named "Address of Credit Card Company Data Sub-segment" is an address pointer to the data sub-segment of a relevant credit card company to which the house card company would request funds.

The next section will provide more details about the Account Managing Status, which appears in every account data set of the financial institution data sub-segment, credit card company data sub-segment, and house card company data sub-segment.

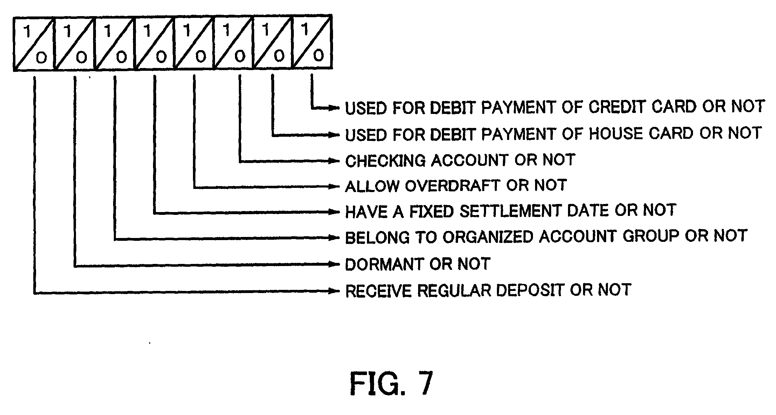

FIG. 7 shows an example of the Account Management Status. This status indicator comprises a plurality of flag bits representing various properties of the account of interest. The example of FIG. 7 shows a series of eight flag bits having the following meanings, from left to right:

- The account receives regular deposit
- The account is dormant
- The account belongs to an organized account group
- The account has a fixed settlement date
- The account allows overdraft
- The account is a checking account
- The account is used for debit payment of house card
- The account is used for debit payment of credit card where each flag bit is set to "1 when the associated condition is true, or to "0" when it is false.

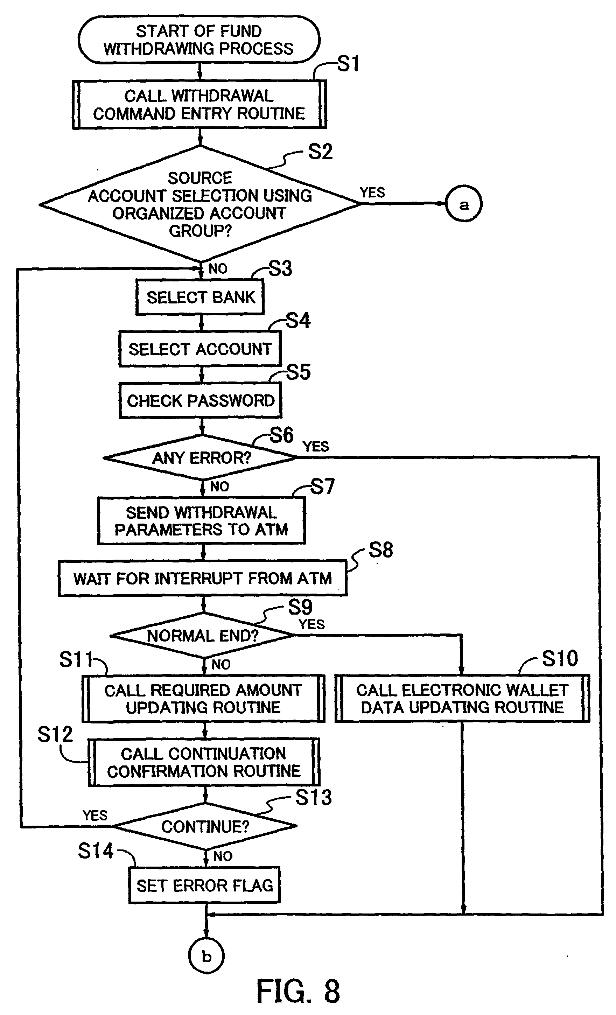

As seen from the above description, the electronic wallet device contains various parameters and flags. The next section describes how such an electronic wallet device is used to withdraw money from a bank account. Suppose that a customer has inserted his/her electronic wallet to an ATM. FIG. 8 is the first half of a flowchart showing a process of fund withdrawal.

(S1) The electronic wallet device calls a withdrawal command entry routine. Besides entering the amount of money be/she wishes to withdraw, the customer can specify how to choose a source account. Available options are: to select from an organized account group, or to choose an appropriate account interactively.

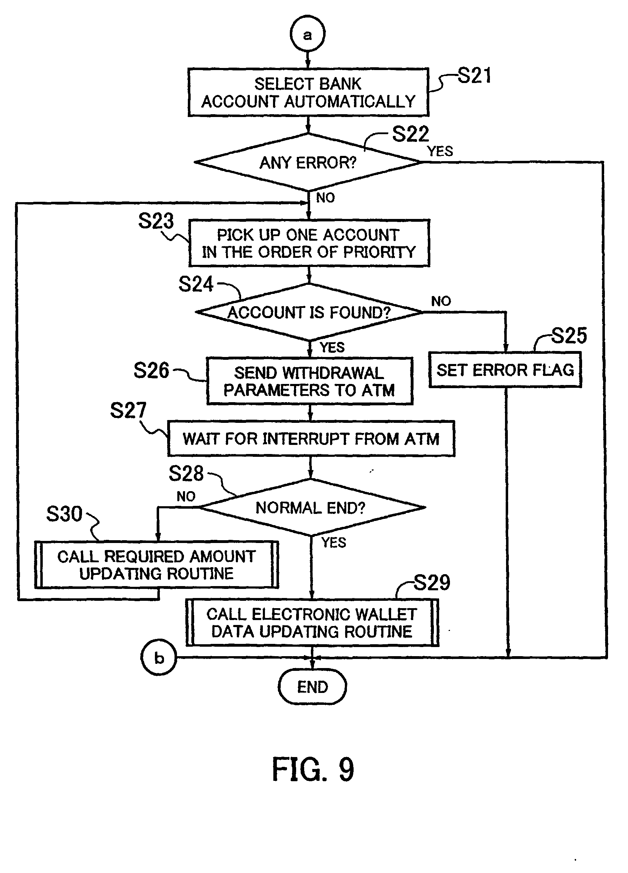

(S2) The electronic wallet device determines whether the customer has specified a source account selection using an organized account group. If so, the process branches to step S21 (FIG. 9). If not, the process advances to S3 to interact with him/her to select an account.

(S3) The electronic wallet device interacts with the customer to help select an appropriate bank. More specifically, the device displays a list of available banks on its monitor screen, allowing the customer to select an appropriate bank where he/she has an account.

(S4) The electronic wallet device accepts an account selection input from the customer. More specifically, the device displays a list of available accounts at the selected bank, prompting the customer to choose a desired account from among them.

(S5) The electronic wallet device checks the customer's password. More specifically, the customer enters his/her password, and the electronic wallet device compares the entered password with the one stored in its account database. If they do not agree, the electronic wallet device sets an error flag.

(S6) The electronic wallet device recognizes the presence of an error by examining the error flag. If there is an error, the process should be terminated. If not, the process advances to step S7.

(S7) The electronic wallet device supplies the ATM with some parameters determined at steps S3 and S4, including the information about the source account, from which a specified amount of electronic money is to be withdrawn.

(S8) The electronic wallet device waits for an interrupt from the ATM.

(S9) The electronic wallet device determines whether the response from the ATM indicates a normal end of the requested processing. If so, the process branches to step S10. If not, the process advances to step S11.

(S10) The electronic wallet device calls a routine of updating its own local memory data, and exits from the process.

(S11) The electronic wallet device calls a process of updating the amount of required money.

(S12) The electronic wallet device calls a process of confirming the continuation of account selection.

(S13) The electronic wallet device determines whether to continue the account selection. If it has to continue, the process returns to step S3. If not, the process advances to step S14.

(S14) The electronic wallet device exits from the current process, after setting an error flag.

FIG. 9 is the second half of the same flowchart.

(S21) The electronic wallet device executes a process of automatic bank account selection. More specifically, the device extracts appropriate accounts to form an organized account group by consulting the financial institution data sub-segment stored in itself. These accounts are then sorted in descending order of priority levels. An error flag would be set if any error was encountered during the process.

(S22) The electronic wallet device recognizes the presence of an error by examining the error flag. If there is an error, the process should be terminated. If not, the process advances to step S23.

(S23) The electronic wallet device picks up one account in the order of priority.

(S24) The electronic wallet device determines whether an account is found at the previous step. If there is an account, the process advances to step S26. If not, the process branches to step S25.

(S25) The electronic wallet device exits from the process after setting the error flag.

(S26) The electronic wallet device supplies the ATM with the withdrawal parameters which specifies the account picked up at step S23 as a source account for the withdrawal.

(S27) The electronic wallet device waits for an interrupt from the ATM.

(S28) The electronic wallet device determines whether the response from the ATM Indicates a normal end of the requested processing. If so, the process advances to step S29. If not, the process branches to step S30.

(S29) The electronic wallet device calls a routine of updating its own local memory data, and exits from the process.

(S30) The electronic wallet device calls a routine of updating the amount of required money. The process then returns to step S23.

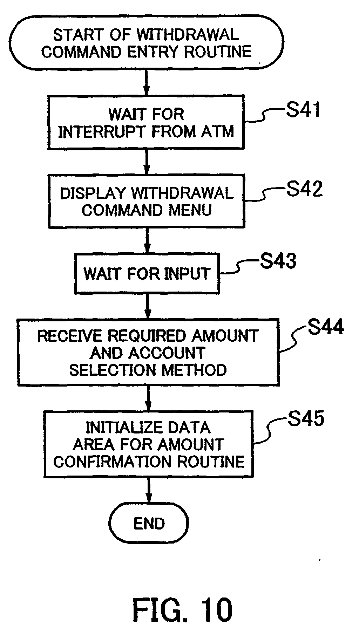

FIG. 10 is a flowchart which shows the details of the withdrawal command entry routine.

(S41) The electronic wallet device waits for an interrupt from the ATM.

(S42) The electronic wallet device accepts a withdrawal command. More specifically, the device displays a withdrawal command menu on a monitor screen and waits for the customer to enter a withdrawal command.

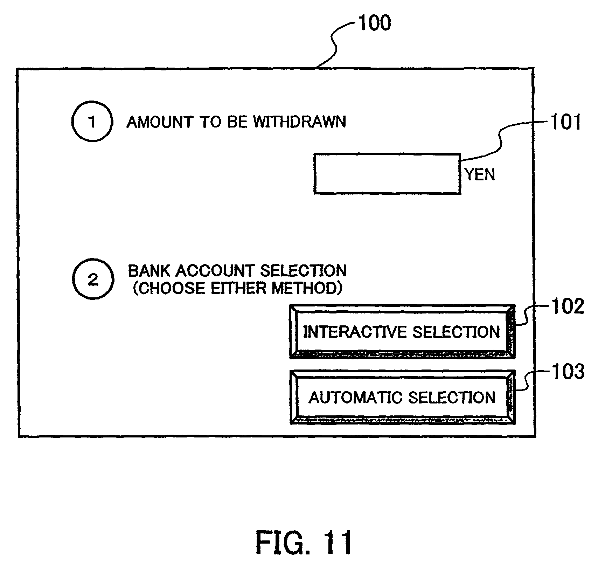

FIG. 11 shows an example of a withdrawal command menu. This withdrawal command menu dialog 100 provides two input items, "Amount to be withdrawn" and "Bank Account Selection." The customer uses an input box 101 to enter the amount of money to be withdrawn. For the selection of a bank account, two buttons 102 and 103 are provided. The customer presses a button 102 to specify a source account interactively, or another button 103 to let the system choose an appropriate source account from an organized account group in an automated way.

(S43) The electronic wallet device waits for the customer to enter data.

(S44) The customer inputs the amount of money to be withdrawn, as well as specifying a selection method of his/her choice. According to the example screen of FIG. 11, tile customer types in the desired amount and then presses the button 102, wishing to specify the source account. Alternatively, he/she may press the button 103 to leave the selection task to the system.

(S45) The electronic wallet device initializes a data area to be used in confirming the requested amount, and then exits from the process. This data area contains the following variables: the required amount ($W_{EMA}$), the total amount withdrawn ($W_{EMB}$), and the amount to be withdrawn ($W_{EMC}$). The initial value of the required amount is what the customer has entered through the withdrawal menu. At this step, the total amount withdrawn is initialized to zero. The amount to be withdrawn is calculated by subtracting the current total amount from the required amount, and therefore, its initial value is equal to the required amount.

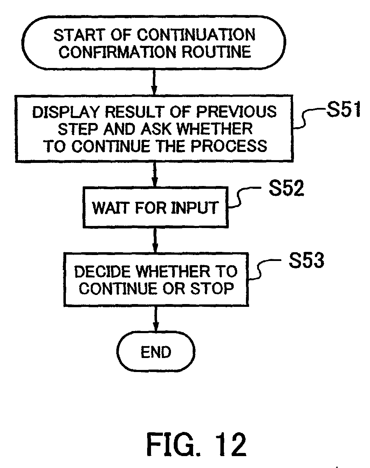

FIG. 12 is a flowchart which shows a process of confirming the continuation of account selection.

(S51) The electronic wallet device displays a dialog to show the result of the previous step and ask the customer whether to continue the process.

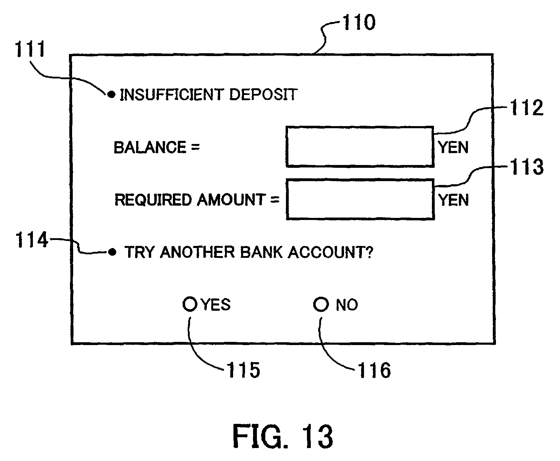

FIG. 13 shows an example screen shot of a continuation confirmation dialog. This continuation confirmation dialog 110 provides the customer with a message 111 indicating insufficient funds, together with a question 114 asking whether to continue the current session. The message 111 provides two boxes 112 and 113 showing the current balance in contrast to the required amount. The question 114 is followed by "YES" and "NO" option buttons 115 and 116, allowing the customer to express his/her intention to continue or stop the session.

(S52) The electronic wallet device waits for an input from the customer.

(S53) The customer makes a choice, deciding whether to continue or stop. In the present example of FIG. 13, the customer clicks the option button 115 when he/she wishes to continue. Otherwise, he/she clicks the other option button 116.

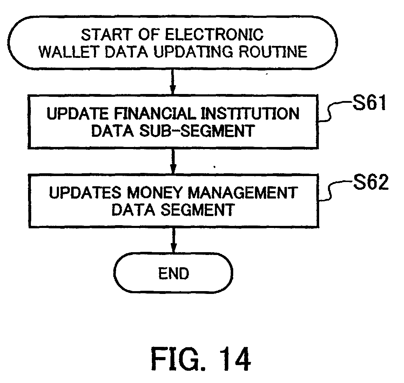

FIG. 14 is a flowchart of the electronic wallet data updating routine.

(S61) The electronic wallet device updates the Financial Institution Data sub-segment.

(S62) The electronic wallet device then updates the Money Management Data segment.

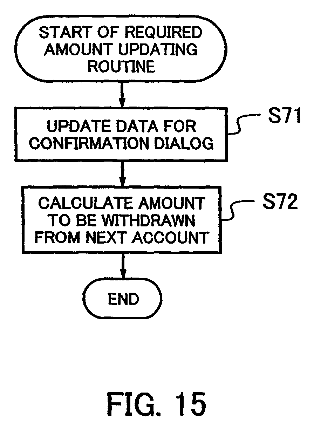

FIG. 15 is a flowchart which shows a required amount updating routine.

(S71) The electronic wallet device updates the data used in the continuation confirmation dialog. More specifically, it first calculates a new total amount withdrawn ($W_{EMB}$) by adding the amount that is available in the account of interest. It then subtracts the new total amount withdrawn ($W_{EMB}$) from the required amount ($W_{EMA}$), thereby updating the amount to be withdrawn ($W_{EMC}$).

(S72) The amount to be withdrawn ($W_{EMC}$), which has been calculated at step S71, is assigned to the next source account.

Through the above processing steps, the proposed electronic wallet device successively examines a group of accounts being arranged in the order of priority, trying to withdraw electronic money from higher-priority accounts, if possible. The same concept can also be applied to the deposit of electronic money. That is, each account is assigned another priority level for use in depositing money, so that the accounts having higher priority levels will receive that deposit. Further, the proposed account selection mechanism may be used in provisional payments, which is an optional feature of electronic checks. In this case, the customer's accounts are prioritized in terms of suitability for provisional payments, so that the system will be able to freeze a required amount of deposit by choosing appropriate source accounts in descending order of their priority levels.

The next section will describe how the system prioritizes the accounts to form an organized account group.

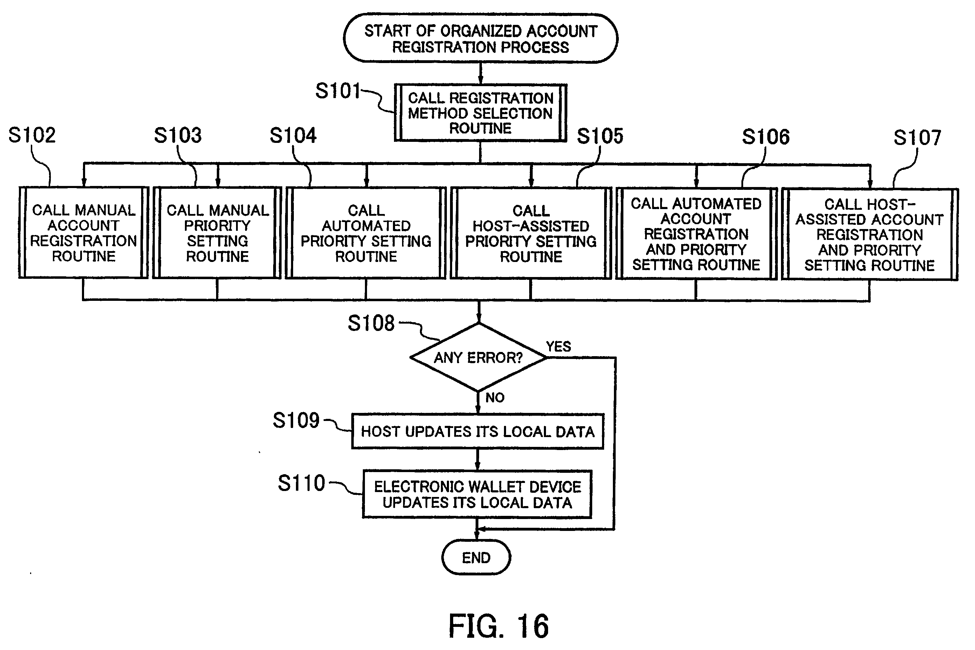

FIG. 16 is a flowchart which shows a process of organized account group registration.

(S101) The electronic wallet device calls a registration method selection routine to obtain an instruction about which registration method should be taken. It then executes one of the following six routines (steps S102 to S107), depending on which method has been specified.

(S102) The device calls a manual account registration routine to define an organized account group interactively.

(S103) The device calls a manual priority setting routine.

(S104) The device calls an automated priority setting routine.

(S105) The device calls a host-assisted priority setting routine.

(S106) The device calls an automated account registration and priority setting routine.

(S107) The device calls a host-assisted account registration and priority setting routine.

When an error is found in any of the above called routines at step S102 to S107, that routine will set an error flag to notify the calling routine of the error.

(S108) The electronic wallet device recognizes the presence of an error by examining the error flag. If the flag is set, the process will be terminated. If not, the process advances to step S109.

(S109) The financial institution processor updates relevant local memory data.

(S110) The electronic wallet device updates its own local memory data.

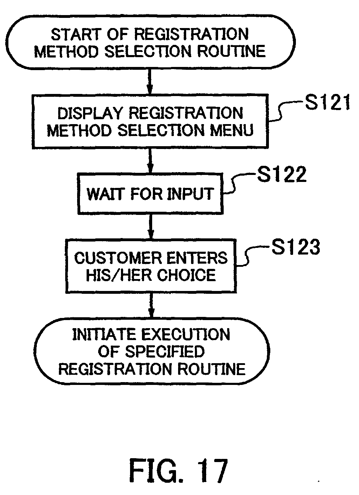

FIG. 17 is a flowchart showing the details of the registration method selection routine.

(S121) The electronic wallet device displays a registration method selection menu.

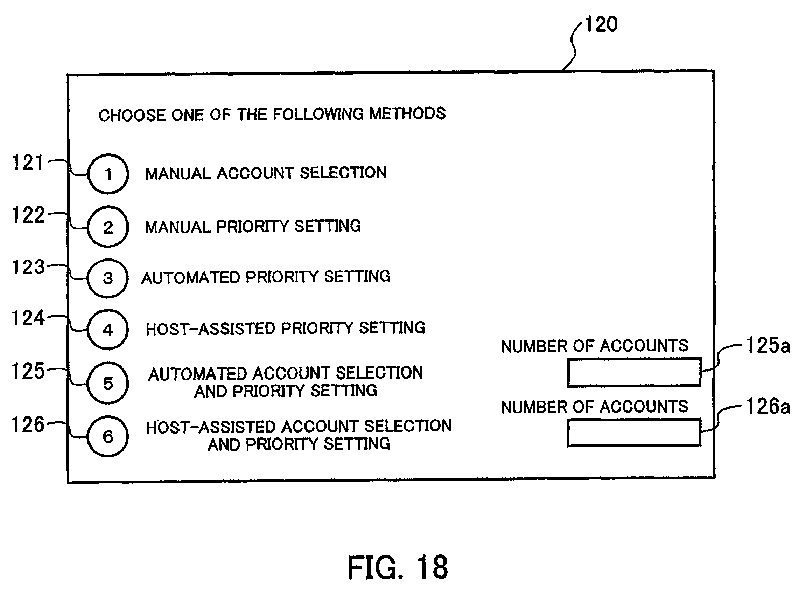

FIG. 18 shows an example screen shot, where a registration method selection menu 120 has six buttons 121 to 126. The customer presses a button 121 when he/she wishes to form an organized account group by specifying member accounts manually. The next button 122 is used when he/she defines the priority levels of the specified accounts manually. For automatic prioritization, a button 123 is to be pressed. Pressing the next button 124 allows another automatic way of setting priority levels, where the customer defines them in cooperation with a host computer. By pressing the button 125, the customer can direct the system to both choose and prioritize the organized accounts. Further, the button 126 permits the customer to do the same with the assistance of a host computer. The menu 120 further provides text boxes 125a and 126a for use with the buttons 125 and 126, respectively. The customer enters the desired number of accounts to these text boxes.

(S122) The electronic wallet device waits for an input from the customer.

(S123) The customer enters his/her choice. Specifically in the present example of FIG. 18, the customer chooses and presses one of the six buttons. He/she has to enter the number of accounts to either of the text boxes 125a and 126a when pressing the button 125 or 126.

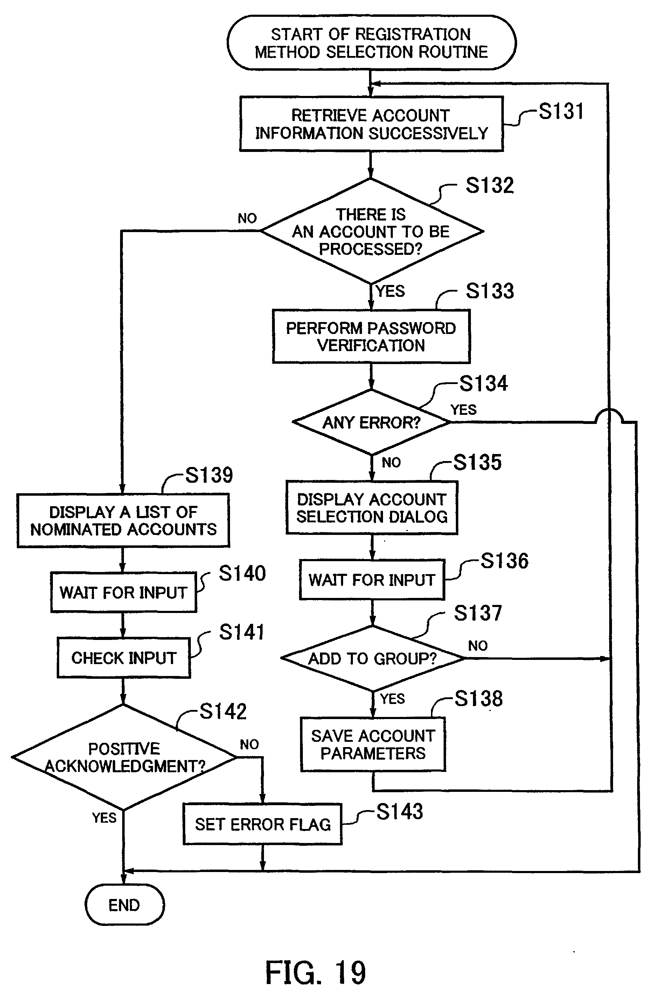

FIG. 19 is a flowchart which shows the details of the manual account registration routine.

(S131) The electronic wallet device successively retrieves information from the financial institution data sub-segment.

(S132) The electronic wallet device determines whether it has an account to process. If it has, the process advances to step S133. If no account remains, the process branches to step S139.

(S133) The electronic wallet device invokes a password verification process, requesting the customer to enter his/her password. If the entered password does not agree with the one stored in itself, the electronic-wallet device sets the error flag.

(S134) The electronic wallet device recognizes the presence of an error by examining the error flag. If the flag is set, the process will be terminated. If not, the process advances to step S135.

(S135) The electronic wallet device displays an account selection dialog to show the parameters of a specific account, prompting the customer to decide whether to choose it as a member of the organized account group.

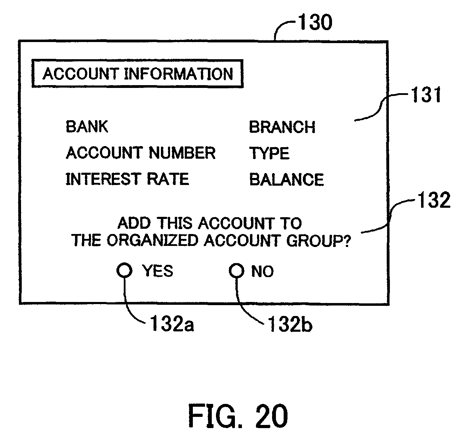

FIG. 20 is an example screen shot of the account selection dialog. The illustrated dialog 130 consists of an account parameter listing block 131 and an organized account setting block 132. The account parameter listing block 131 shows parameters of a specific bank account, including: bank name, branch office name, account number, account type (e.g., deposit account, or checking account), interest rate, and current balance. The organized account setting block 132 provides "Yes" and "No" option buttons 132a and 132b.

(S136) The electronic wallet device waits for an input from the customer. The customer makes a decision about whether to add the displayed account to the organized account group. In the present example of FIG. 20, the customer clicks the option button 132a to register the account as a member of the group, or the other option button 132b to skip the account.

(S137) The electronic wallet device determines whether the customer wishes to have the account included in the organized account group. If so, the process advances to step S138. If not, the process returns to step S131.

(S138) The electronic wallet device sets a relevant flag bit in the account management status to indicate that the account of interest is a member of the organized account group. It then saves the account parameters. The process returns to step S131.

(S139) For the purpose of confirmation, the electronic wallet device displays a dialog to show a list of accounts that the customer has nominated so far.

(S140) The electronic wallet device waits for an input from the customer. The customer reviews the listing on the monitor screen and returns a positive or negative acknowledgment.

(S141) The electronic wallet device checks the customer's response.

(S142) If the response is positive, the process is terminated. If it is negative, the process advances to step S143.

(S143) The electronic wallet device exits from the current process, after setting an error flag.

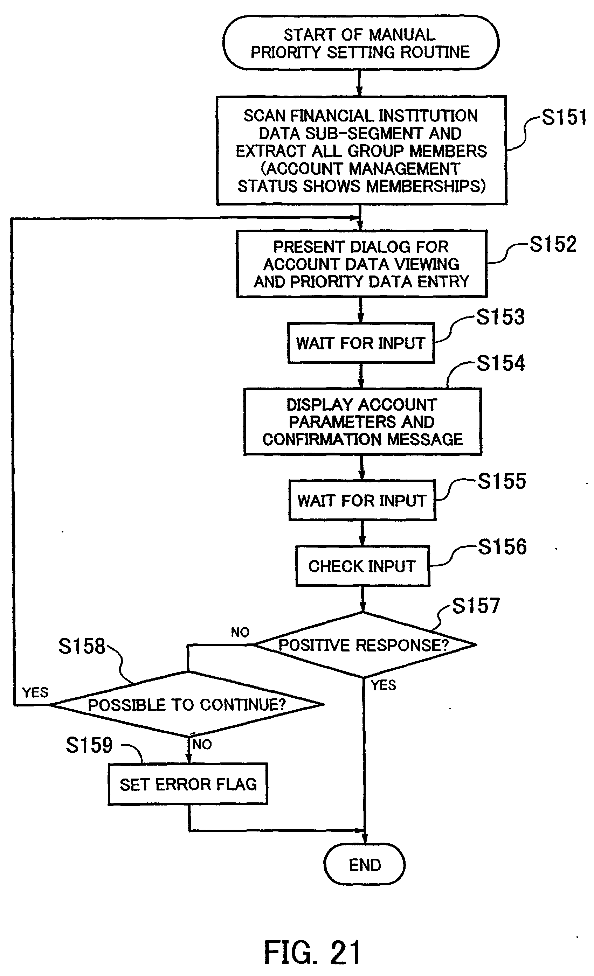

FIG. 21 is a flowchart which shows the details of the manual priority setting routine.

(S151) Scanning through the financial institution data sub-segment, the electronic wallet device extracts all member accounts out of the organized account group, which are distinguishable from others because their account management status indicates the membership.

(S152) The electronic wallet device presents a dialog for viewing account parameters and entering priority levels.

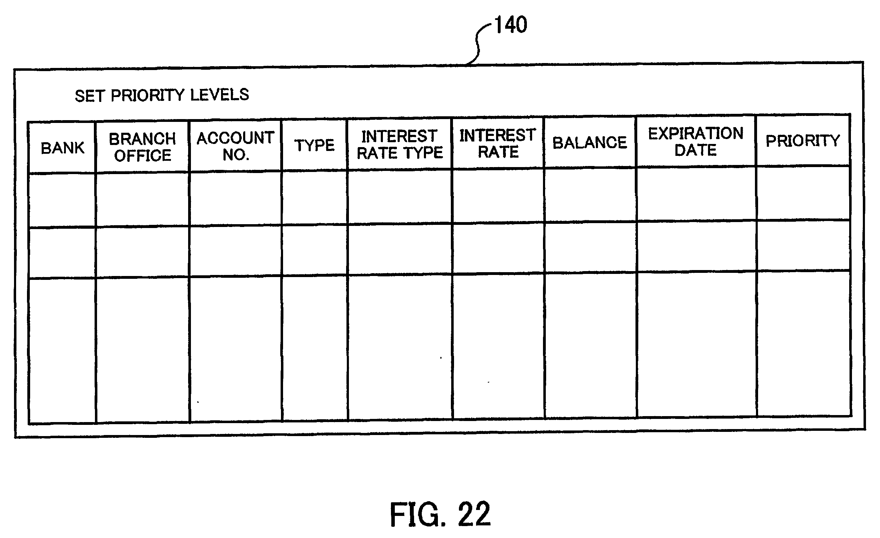

FIG. 22 is an example screen shot of this dialog. The illustrated dialog 140 lists all the members of the organized account group, showing their account parameters in table form. The account parameters includes the following items: bank name, branch office name, account number, account type, interest rate type (e.g., fixed rate or variable rate), interest rate, current balance, and expiration date (for time and saving deposit accounts only). The column named "Priority" of the table is prepared for data entry from the customer. After reviewing the displayed account parameters, the customer determines and enters the priority level of each account.

(S153) The electronic wallet device waits for an input from the customer. In the present context, he/she enters priority levels.

(S154) The electronic wallet device displays again the parameter list, which now includes the priority levels of the accounts. The screen also shows a confirmation message to the customer.

(S155) The electronic wallet device waits for an acknowledgment from the customer.

(S156) The electronic wallet device checks the customer's response.

(S157) The electronic wallet device determines whether the response is positive. If so, the process is terminated. If not, the process advances to step S158.

(S158) The electronic wallet device determines whether it is possible to continue the processing. If it is possible, the process returns to step S152. If not, the process advances to step S159.

(S159) The electronic wallet device exits from the current process, after setting an error flag.

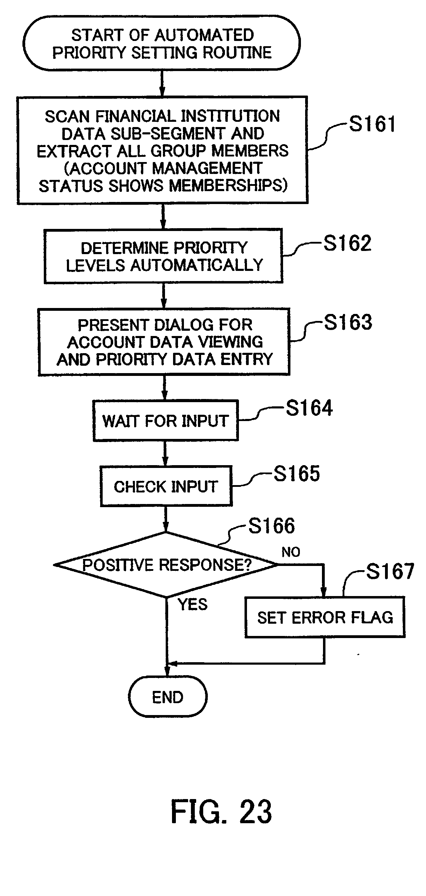

FIG. 23 is a flowchart which shows the details of the automated priority setting routine.

(S161) Scanning through the financial institution data sub-segment, the electronic wallet device extracts all member accounts out of the organized account group.

(S162) The device determines the priority levels of the accounts automatically.

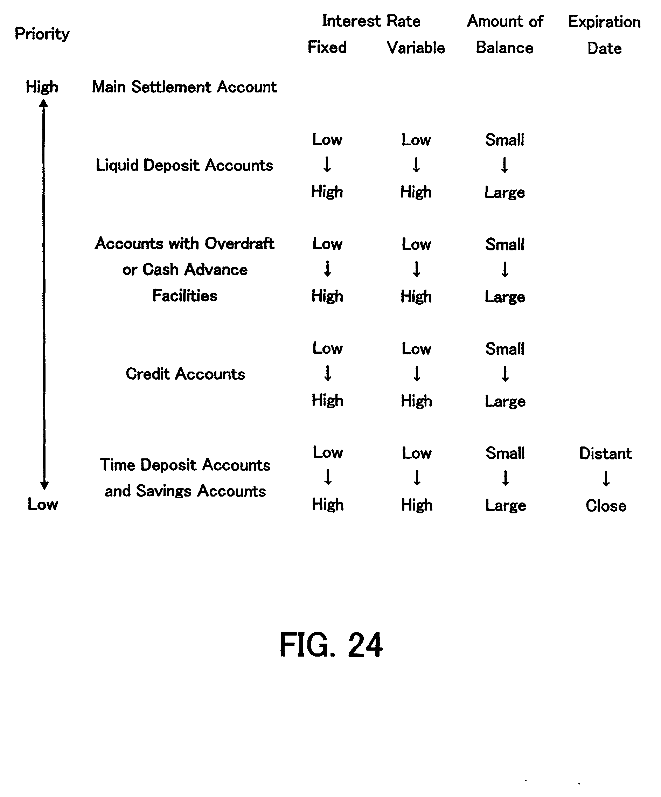

FIG. 24 shows an example of criteria for this automated priority setting. Specifically, the highest priority is given to the customer's main settlement account, which has to be specified previously. The other accounts are then prioritized in accordance with their types. That is, successively lower priority levels are assigned to liquid deposit accounts (e.g., demand deposit), accounts with overdraft or cash advance facilities, credit accounts, and time deposit and savings accounts. Within each account type, higher priority levels are given to those having lower fixed interests rates. When they have the same fixed interest rate, the accounts having lower variable interest rates are granted higher priority. Smaller balance is the next factor that contributes to higher priority. Regarding time deposit accounts and savings accounts, higher priority levels are assigned to those with a longer remaining term when they are equal in the account balance.

(S163) The electronic wallet device presents a dialog for viewing and confirming the setup.

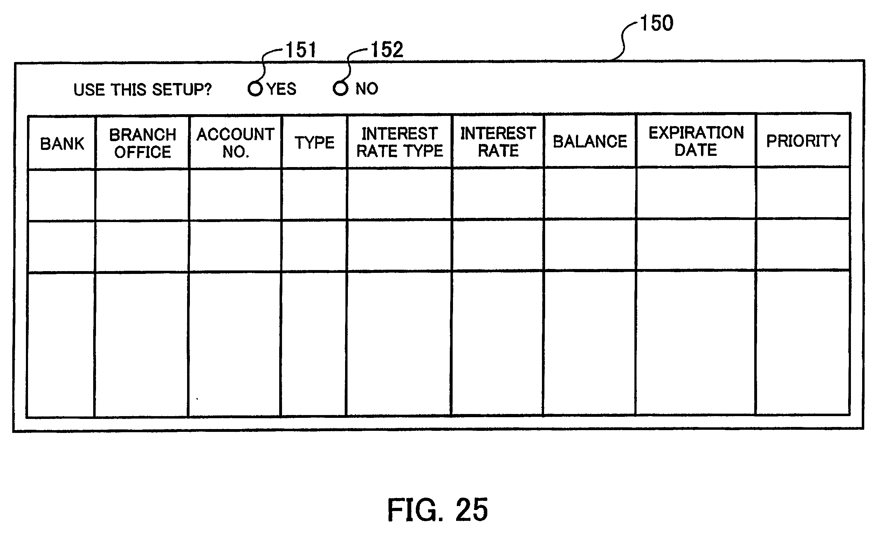

FIG. 25 is an example screen shot of such a dialog. The illustrated dialog 150 provides information about all member accounts of the organized account group, including their priority levels. On top of that, there are "Yes" and "No" option buttons 151 and 152.

(S164) The electronic wallet device waits for an acknowledgment from the customer. The customer confirms the current priority setup displayed on the screen and returns a positive or negative response. In the example of FIG. 25, the customer clicks the "Yes" option button 151 when he/she has no problem with the setup. If some correction is needed, the customer clicks the "No" option button 152.

(S165) The electronic wallet device checks the customer's response.

(S166) The electronic wallet device determines whether the response is positive. If so, the process is terminated. If not, the process advances to step S167.

(S167) The electronic wallet device exits from the process after setting an error flag.

While the above section has described the automated priority setting routine, the customer may wish to set up the same with the assistance of a host computer. The next section will provide the details.

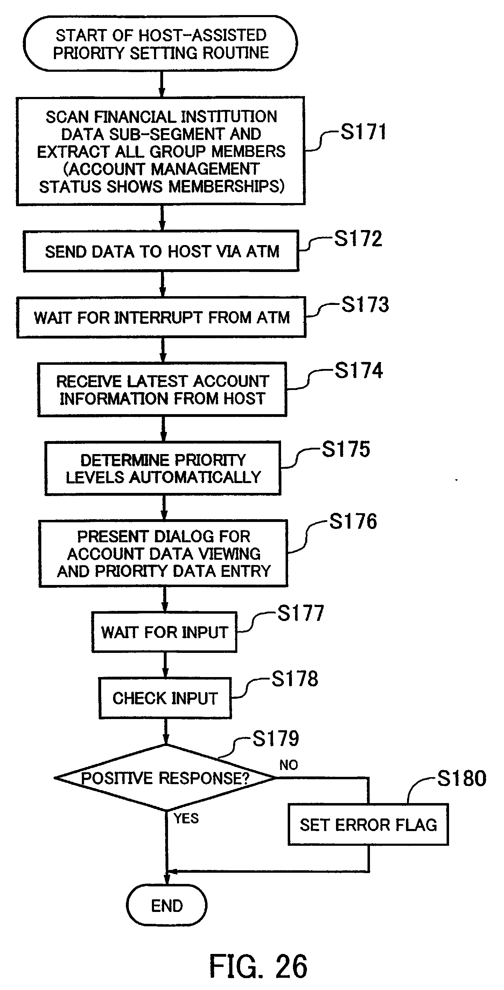

FIG. 26 is a flowchart which shows the details of the host-assisted priority setting routine.

(S171) Scanning through the financial institution data sub-segment, the electronic wallet device extracts all member accounts out of the organized account group.

(S172) The electronic wallet device sends the data of the organized account group to a relevant host computer (i.e., financial institution processor) through the ATM being used.

(S173) The electronic wallet device waits for an interrupt from the ATM. During this period, the host financial institution processor collects the latest information about the organized accounts and sends it back to the electronic wallet device.

(S174) The electronic wallet device receives the latest account information from the host financial institution processor.

(S175) The device determines priority levels automatically.

(S176) The electronic wallet device presents a dialog to allow the customer to browse the account and priority data (see FIG. 25 for details of the dialog).

(S177) The electronic wallet device waits for an input from the customer. The customer confirms the priority setup displayed on the screen and returns a positive or negative response.

(S178) The electronic wallet device checks the customer's response.

(S179) The electronic wallet device determines whether the response is positive. If so, the process is terminated. If not, the process advances to step S180.

(S180) The electronic wallet device exits from the current process, after setting an error flag.

The above section has described the host-assisted priority setting routine. The assistance of a host computer enables the customer to prioritize the accounts more accurately through the use of the latest account information. The next section will now describe the automated account registration and priority setting routine in detail.

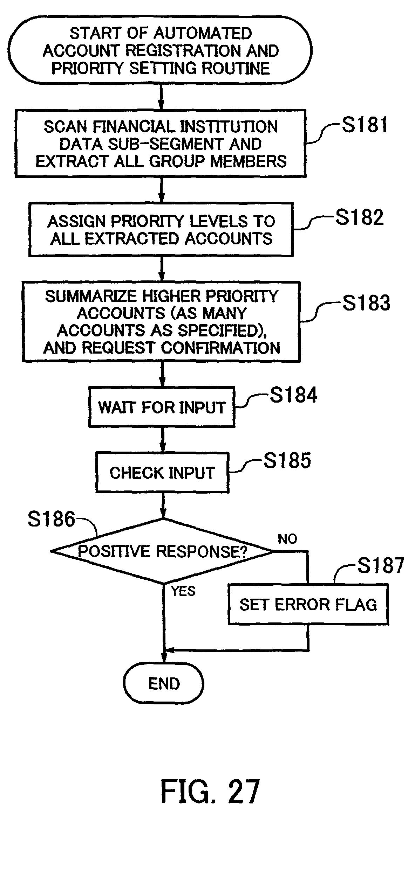

FIG. 27 is a flowchart which shows the details of the automated account registration and priority setting routine.

(S181) Scanning through the financial institution data sub-segment, the electronic wallet device extracts all member accounts out of the organized account group.

(S182) The device automatically assigns priority levels to all the extracted accounts.

(S183) The electronic wallet device presents a dialog that summarizes the account parameters of as many accounts as specified by the customer. The dialog asks the customer to make a confirmation, as in the dialog described earlier in FIG. 25.

(S184) The electronic wallet device waits for an input from the customer. The customer confirms the current priority setup displayed on the screen and returns a positive or negative response.

(S185) The electronic wallet device checks the customer's response.

(S186) The electronic wallet device determines whether the response is positive. If so, the process is terminated. If not, the process advances to step S187.

(S187) The electronic wallet device exits from the current process after setting an error flag.

While the above section has described the automated account selection and priority setting routine, the customer may wish to set up the same with the assistance of a host computer. The next section will provide the details.

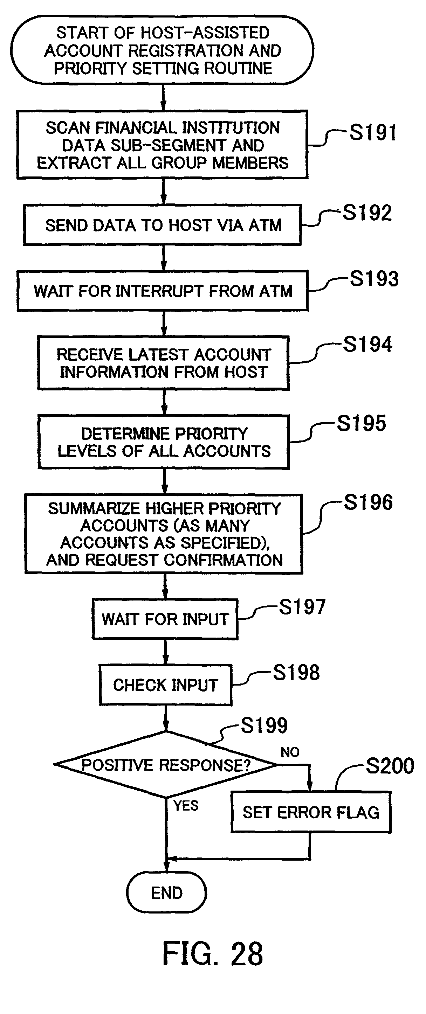

FIG. 28 is a flowchart which shows the details of the host-assisted account registration and priority setting routine.

(S191) Scanning through the financial institution data sub-segment, the electronic wallet device extracts all member accounts out of the organized account group.

(S192) The electronic wallet device sends the data of the organized account group to a relevant host computer (i.e., financial institution processor) through the ATM being used.

(S193) The electronic wallet device waits for an interrupt from the ATM. During this period, the host financial institution processor collects the latest information about the organized accounts and sends it back to the electronic wallet device.

(S194) The electronic wallet device receives the latest account information from the host.

(S195) The device automatically assigns priority levels to all the extracted accounts.

(S196) The electronic wallet device presents a dialog that summarizes the account parameters for as many accounts as specified by the customer. The dialog asks the customer to make a confirmation, as in the dialog described earlier in FIG. 25.

(S197) The electronic wallet device waits for an input from the customer. The customer confirms the current priority setup displayed on the screen and returns a positive or negative response.

(S198) The electronic wallet device checks the customer's response.

(S199) The electronic wallet device determines whether the response is positive. If so, the process is terminated. If not, the process advances to step S200.

(S200) The electronic wallet device exits from the current process after setting an error flag.

The above is the details of the host-assisted account registration and priority setting routine.

Through the processing steps described in FIGS. 16 to 28, the customer defines an organized account group and prioritizes its member accounts either manually or automatically. Manual setup allows the customer to have his/her intention directly reflected in the prioritization. Automated setup, on the other hand, lets the system to determine the priority levels in view of the expected benefits to the customer.

The above explanation has assumed that an electronic wallet device defines an organized account group and chooses an appropriate target account when depositing or withdrawing money. As an alternative arrangement, the target account selection may be implemented as an integral part of financial institution processors or electronic wallet management units.

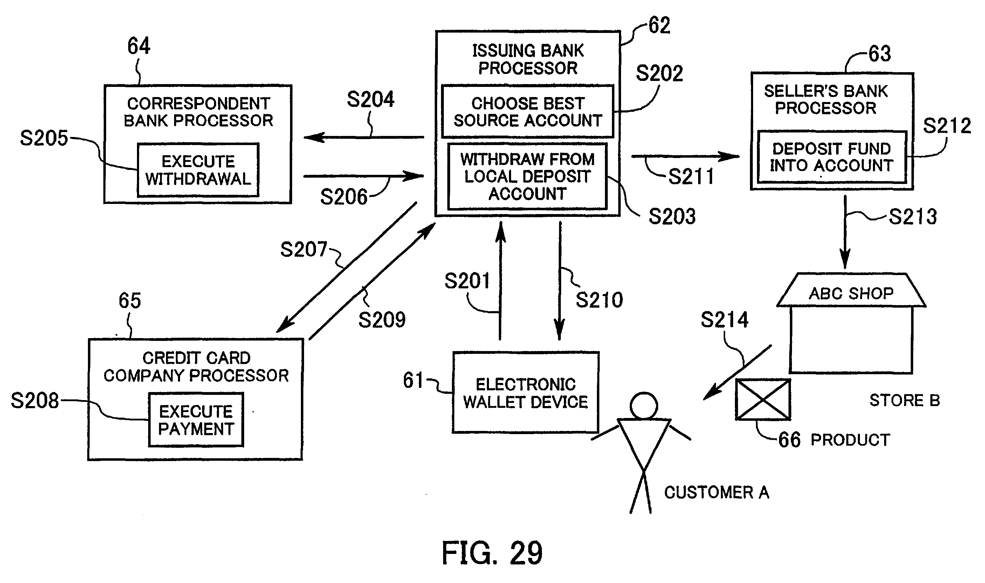

FIG. 29 shows how a financial institution processor selects an appropriate source account in a payment session. In the illustrated system, a customer A has an electronic wallet device 61 to buy a product 66 from a store B. This electronic wallet device 61 has been Issued from an issuing bank processor 62, which serves a bank where the customer A owns his/her account. The store B, on the other hand, has their account at a different bank, which is served by a seller's bank processor 63. The issuing bank has a correspondent contract with another bank, which is referred to as the correspondent bank. A correspondent bank processor 64 is a processor supporting this bank, and the customer A has another bank account there. In addition to the two bank accounts mentioned above, the customer has a credit account at a credit card company, which is supported by a credit card company processor 65.

(S201) The customer A issues a purchase order to the store B to buy a product 66 from them. With his/her electronic wallet device 61, the customer sends a payment request to the issuing bank processor 62, thereby initiating a credit transfer to the store B's bank account.

(S202) The issuing bank processor 62 chooses the best source account. Here, the account with the highest priority is considered to be the best source account, since the expected benefit to the customer is maximized when using that account for payment. The criteria for choosing the best source account is therefore the same as what has already been explained in FIG. 24. The best source account identified at this step may or may not be the one being managed at the issuing bank processor 62 itself. If the best source account is at the issuing bank, the process advances to step S203. If it is at the correspondent bank, the process advances to step S204. If it is at the credit card company, the process advances to step S207.

(S203) The issuing bank processor 62 attempts a withdrawal from the local deposit account of the customer A. This withdrawal will be successfully accomplished if the current balance of the customer A's account shows a sufficient deposit. The process then advances directly to step S210. If the amount of deposit is insufficient, the process proceeds to step S204.

(S204) The issuing bank processor 62 requests its correspondent bank processor 64 to make a withdrawal.

(S205) The correspondent bank processor 64 attempts to withdraw the required funds from the customer A's account held in itself.

(S206) The correspondent bank processor 64 notifies the issuing bank processor 62 of the result of the withdrawal. The process advances to step S210 if the requested fund has successfully been withdrawn from the account. If it is unable to complete the withdrawal due to a shortage of deposit, the process advances to step S207.

(S207) The issuing bank processor 62 requests a credit card company processor 65 to make a payment

(S208) The credit card company processor 65 executes the requested payment with the customer's account.

(S209) The credit card company processor 65 notifies the issuing bank processor 62 of the result of the payment.

(S210) The issuing bank processor 62 notifies the customer A's electronic wallet device 61 of the result.

(S211) The issuing bank processor 62 transfers the fund to the store B's account at the seller's bank processor 63.

(S212) The seller's bank processor 63 deposits the transferred fund to the account of the store B.

(S213) The seller's bank processor 63 notifies the store B that the customer has completed the payment.

(S214) A clerk at the store B ships the ordered product 66 to the customer A.

Through the above processing steps, the system helps the customer A make a payment, choosing his/her best account that has high priority and transferring monetary data therefrom to the store B's account.

The next section will describe how the issuing bank processor selects the best source account.

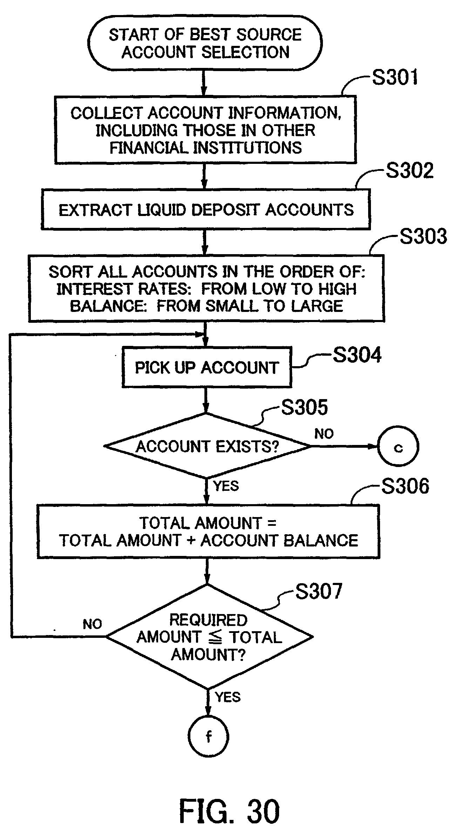

FIG. 30 is the first part of a flowchart showing a process of best source account selection.

(S301) The issuing bank processor collects account information concerning the customer of interest, including his/her accounts at other financial institutions.

(S302) The processor first extracts liquid deposit accounts (e.g., ordinary deposits) from the collected account information.

(S303) The processor sorts the list of liquid deposit accounts collected from the issuing bank and other institutions, in ascending order of interest rates. If there are two or more accounts with the same interest rate, those with a smaller amount of balance come first.

(S304) The processor picks up an account successively from the sorted list and assigns it as a source account front which the fund is to be withdrawn. The withdrawal from this account is decided at this point in time.

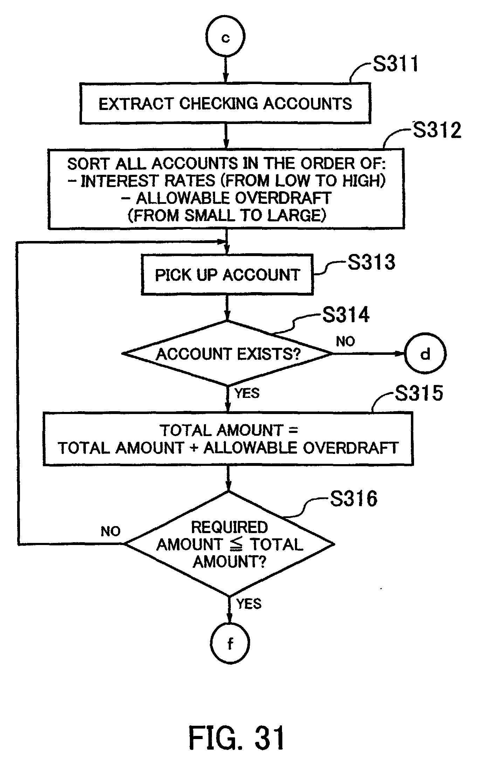

(S305) The processor determines whether it has successfully found a source account at step S304. If so, the process advances to step S306. If not, the process branches to step S311 (FIG. 31).

(S306) The processor maintains a variable representing the total amount of money that is to be withdrawn from the determined source accounts. At this step, the processor updates this total amount by adding thereto the value of the current balance of the source account of Interest.

(S307) The processor compares the required amount with the updated total amount to be withdrawn. If the updated total amount is equal to or greater than the required amount, the process is terminated. Otherwise, the process returns to step S304. Note that when the total amount exceeds the required amount, their difference will remain in the last account. In other words, only a necessary amount of money will be withdrawn from the last source account.

FIG. 31 is the second part of the same flowchart.

(S311) The processor extracts checking accounts from among the accounts collected at step S301.

(S312) The processor sorts the list of checking accounts collected from the issuing bank and other institutions, in ascending order of interest rates. If there are two or more accounts with the same interest rate, those that allow a greater overdraft limit should come first.

(S313) The processor picks up an account successively from the sorted list and assigns it as a source account from which the fund is to be withdrawn. The amount of possible overdraft of this account is determined at this point in time.

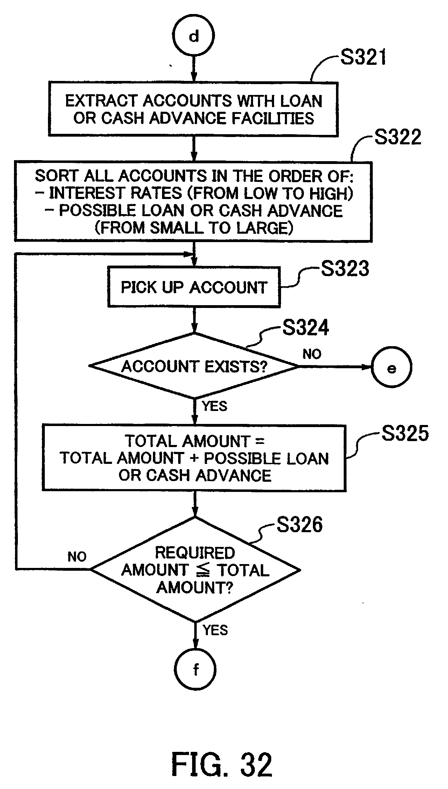

(S314) The processor determines whether it has successfully found a source account at step S313. If so, the process advances to step S315. If not, the process branches to step S321 (FIG. 32).

(S315) The processor updates the total amount to be withdrawn by adding the amount of allowable overdraft of the source account of interest.

(S316) The processor compares the required amount with the updated total amount to be withdrawn. If the updated total amount is equal to or greater than the required amount, the process is terminated. Otherwise, the process returns to step S313. Note that when the total amount exceeds the required amount, their difference will remain in the last source account.

FIG. 32 is the third part of the same flowchart.

(S321) From among the accounts collected at step S301, the processor extracts accounts with loan or cash advance facilities.

(S322) The processor sorts the account list in ascending order of interest rates, regardless of which bank maintains them. If there are two or more accounts with the same interest rate, those having reached closer to the credit limit should come first.

(S323) The processor picks up an account successively from the sorted list and assigns it as a source account from which the fund is to be withdrawn. The amount of a possible loan or cash advance with this account is determined at this point in time.

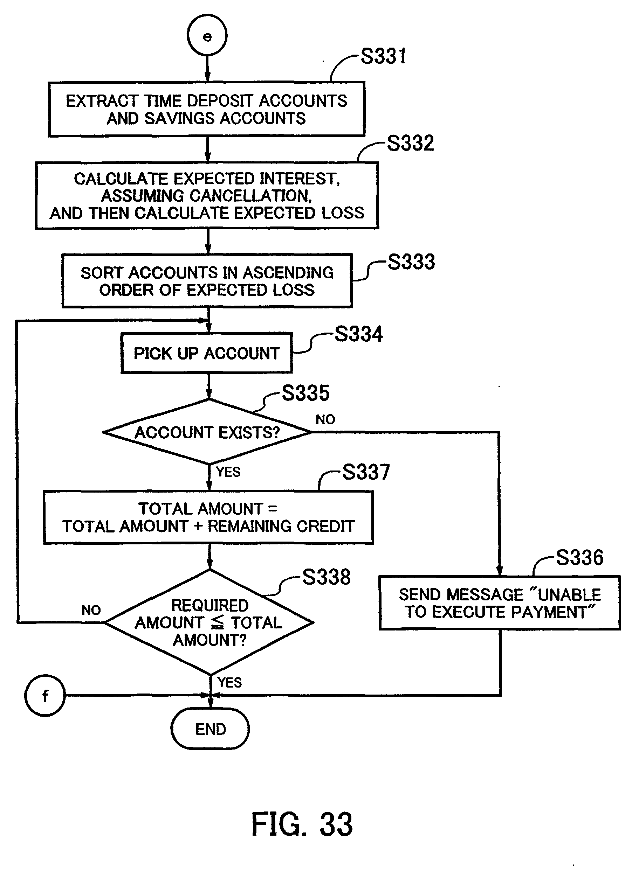

(S324) The processor determines whether it has successfully found a source account at step S323. If so, the process advances to step S325. If not, the process branches to step S331 (FIG. 33).

(S325) The processor updates the total amount to be withdrawn, by adding the amount of a possible loan or cash advance that the source account of interest can provide.

(S326) The processor compares the required amount with the updated total amount. If the updated total amount is equal to or greater than the required amount, the process is terminated. Otherwise, the process returns to step S323. Note that when the total amount exceeds the required amount, their difference will remain in the last source account.

FIG. 33 is the fourth part of the same flowchart.

(S331) From among the accounts collected at step S301, the processor extracts time deposit accounts and savings accounts.

(S332) The processor calculates the expected interest of each account, assuming its cancellation before maturity. Based on that value, it then calculates the expected loss of interest according to the following formula.

Expected loss = Expected interest at maturity date - Expected interest at payment date

where the payment is to be made earlier than the maturity date.

(S333) The processor sorts the account list in ascending order of the expected loss.

(S334) The processor picks up an account successively from the sorted list and assigns it as a source account from which the fund is to be withdrawn. The amount of the capital and interest to be withdrawn from this account is determined at this point in time.

(S335) The processor determines whether it has successfully found a source account at step S334. If so, the process advances to step S337. If not, the process branches to step S336.

(S336) The processor sends an error message to the customer's electronic wallet device to indicate that it is unable to execute the payment. The process is terminated accordingly.

(S337) The processor updates the total amount to be withdrawn by adding the amount of the capital and interest that the source account of interest provides.

(S338) The processor compares the required amount with the updated total amount to be withdrawn. If the updated total amount is equal to or greater than the required amount, the process is terminated. Otherwise, the process returns to step S334. When the total amount exceeds the required amount, their difference will either remain in the last source account, or be transferred to another account selected as the best account for depositing.

Through the above processing steps, the issuing bank processor determines one or more appropriate source accounts for withdrawal of funds.

While the issuing bank processor in the above example is configured to collect information about all relevant accounts so as to determine appropriate source accounts, the present invention is not restricted to this specific configuration. As an alternative, the issuing bank processor may send an inquiry to each relevant financial institution processor on an on-demand basis, asking whether the customer's account can be used for payment. In this case, an account will be assigned as one of the source accounts when its host financial institution processor returns a positive response to the inquiry.

Meanwhile, the electronic wallet devices allow customers to use electronic checks. Electronic checks contain authentication data of a specific bank, which is assigned at their issuance. When a check Issuance request is received from a customer, the issuing bank freezes a certain amount of deposit in the customer's account, depending on his/her creditworthiness. The creditworthiness is a numerical value representing the customer's credibility; the issuing bank grants greater creditworthiness values to those who are trustworthy. The issuing bank processor freezes a smaller amount for a creditworthy customer, and a larger amount (i.e., closer to the maximum amount to be drawn) for a less creditworthy customer. Once it is frozen, even the account holder cannot withdraw the deposit unless he/she follows appropriate steps.

The present invention can be applied to the issuance procedure of electronic checks. That is, the best source account can be chosen from an organized account group, and an appropriate amount of deposit will be frozen in that account. This Is accomplished in the same way as the payment process described earlier.

When making a payment by electronic check, the customer may draw an electronic check with a provisional payment option, so that the seller can cash in the check after the customer receives a product that he/she ordered. In this case, a provisional withdrawal is initiated by the issuing bank when they receive a fund transfer request as a result of the drawing of an electronic check with a provisional payment option. The provisional withdrawal refers to a process of freezing a certain amount of funds for a payment. This provisional withdrawal may be another place where the organized account group of the present invention serves well. That is, the system chooses the most advantageous source account from the organized account group, and then freezes a required amount of deposit. The following will provide the details of this type of payment process.

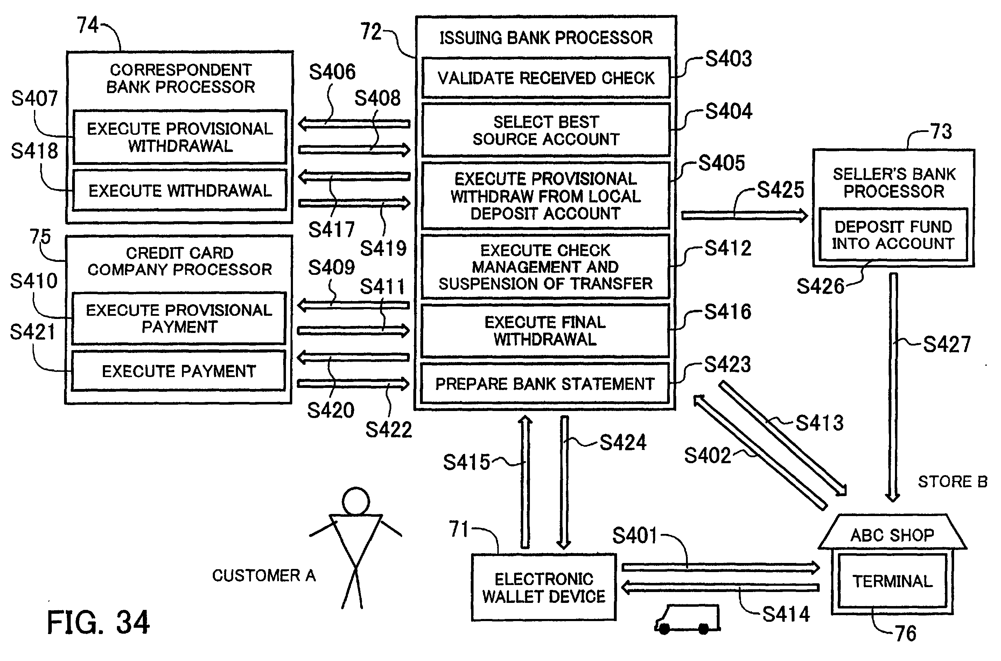

FIG. 34 shows a payment procedure including a provisional payment in a transaction using an electronic check.

(S401) A customer A issues a purchase order to a store B to buy a certain product from them. With his/her electronic wallet device 71, the customer draws an electronic check to make a provisional payment for the cost.

(S402) The store B accepts that electronic check at its terminal 76. In response to this, a store clerk operates the terminal 76, requesting the issuing bank processor 72 to validate the electronic check for the purpose of provisional payment and make a transfer.

(S403) Upon receipt of the request, the issuing bank processor 72 examines the authentication data of the received electronic check for provisional payment. This ensures that the issuer of the check is the bank itself.

(S404) The issuing bank processor 72 selects the best source account. In view of the benefit to the customer A, the candidate accounts are prioritized in the following order: an account at the issuing bank, an account at the correspondent bank, a credit account at the credit card company.

(S405) The issuing bank processor 72 attempts to make a provisional withdrawal from the customer A's account held in itself. The issuing bank processor 72 freezes a part of his/her deposit for future payment. Note that no funds are actually transferred at this stage of provisional withdrawal. If the current balance of the customer A's account shows a sufficient deposit, the process skips to step S412. If not, steps S406 and later should be executed.

(S406) The issuing bank processor 72 requests the correspondent bank processor 74 to carry out a provisional withdrawal.

(S407) The correspondent bank processor 74 initiates a provisional withdrawal as requested, if the current balance of the customer A's account shows a sufficient deposit.

(S408) The correspondent bank processor 74 notifies the issuing bank processor 72 of the result of the provisional withdrawal. That is, it reports the specifics if the provisional, withdrawal has successfully been finished. If it is unable to execute the provisional withdrawal due to a shortage of deposit, the correspondent bank processor 74 so notifies the issuing bank processor 72.

The issuing bank processor 72 receives the result notification from the correspondent bank processor 74. If the notification indicates successful completion, the issuing bank processor 72 advances its processing to step S412. If not, it executes steps S409 and later.

(S409) The issuing bank processor 72 requests the credit card company processor 75 to carry out a provisional payment.

(S410) If the credit limit of the customer A allows it, the credit card company processor 75 executes the provisional payment as requested.

(S411) The credit card company processor 75 notifies the issuing bank processor 72 of the result of the provisional payment. That is, it reports, the specifics when the provisional payment has successfully finished. When it is unable to execute a provisional payment due to the lack of sufficient credit, the credit card company processor 75 so notifies the issuing bank processor 72.

(S412) The issuing bank processor 72 executes the processes of check management and suspension of transfer. Here, the term "suspension of transfer" denotes a process to freeze a required amount of money for future transfer operations.

(S413) The issuing bank processor 72 notifies the terminal 76 at the store B of the overall result of the past steps, which were executed in response to the fund transfer request from the terminal 76.

(S414) The notification message from the issuing bank processor 72 indicates that the payment has been ensured. With this indication, a clerk at the store B ships the ordered product to the customer A.

(S415) The customer A makes sure that the delivered product is exactly what he/she ordered. With his/her electronic wallet device 71, the customer A then sends a payment permission to the issuing bank processor 72.

(S416) The issuing bank processor 72 executes a final withdrawal from the customer's account to which the cost is being charged. When the charged account is at the issuing bank itself, the process proceeds to step S423.

When the charged account is at the correspondent bank, the process executes steps S417 to S419. When the charged account is at the credit card company, the process executes steps S420 to S422.

(S417) When the charged account is at the correspondent bank, the issuing bank processor 72 requests the correspondent bank processor 74 to execute a withdrawal.

(S418) The issuing bank processor 72 requests the correspondent bank processor 74 to carry out the requested withdrawal.

(S419) The correspondent bank processor 74 notifies the issuing bank processor 72 of the result of the withdrawal. The process then advances to step S423.

(S420) When the charged account is at the credit card company, the issuing bank processor 72 requests the credit card company processor 75 to execute a payment.

(S421) The credit card company processor 75 executes the requested payment.

(S422) The credit card company processor 75 notifies the issuing bank processor 72 of the result of the payment.

(S423) The issuing bank processor 72 creates a bank statement.

(S424) The issuing bank processor 72 sends the created bank statement to the customer A.

(S425) The issuing bank processor 72 notifies the seller's bank processor 73 that the customer A is transferring money to complete the payment.

(S426) The seller's bank processor 73 deposits the transferred money to the store B's account.

(S427) The seller's bank processor 73 notifies terminal 76 that the customer has completed the payment.

The above-described way of electronic check payment permits the customer A to avoid the risk of missing a product for which he/she paid money.

So far the embodiment has been explained in the context of withdrawal of money from an organized account group either immediately or after freezing a deposit (as in the case of electronic checks). The invention, however, should not be limited to fund-withdrawing applications, but can be extended to other processes of depositing money into bank accounts. While the same concept applies basically in this case, the member accounts are prioritized in the opposite order when they are evaluated as the destination of a deposit. That is, an account with a higher interest rate will be given a higher priority level, and the best destination account is selected accordingly. When there is a certain amount of money to be deposited, it will be transferred in whole to a single destination account having the highest priority level, unless it hits a predetermined deposit ceiling (if any). Alternatively, the money can be distributed to a plurality of accounts if to do so is more beneficial to the customer.

Regarding the method of priority setting and best account selection, the proposed algorithm may be modified to take into consideration how frequently each account is used. That is, an inactive account will be given a higher priority level in fund withdrawal operations.

As a variation of the above-described embodiment, what have been explained as the functions of an electronic wallet device may be implemented on a personal computer or other terminal device. Also, what have been explained as the functions of a financial institution processor may be implemented on an electronic wallet management unit. In this case, however, the electronic wallet management unit should skip some processing steps concerning the customer's accounts because it does not directly manage them (which is the role of each issuing financial institution processor).

The present invention further allows an ATM or any financial institution processor to send a money withdrawal request to another financial institution processor having a best account selection capability. This feature may be used along with a direct debit service for the payment of public utility charges or the like. The payment is made from the most suitable account selected from among an organized account group.

In the above explanation of the preferred embodiment, the electronic wallet device chooses appropriate accounts on the basis of their priority levels that have been assigned previously. Alternatively, the electronic wallet device may determine the best account(s) by calculation, when it receives a specific service request, including withdrawal of money.

Further, in the above explanation of the preferred embodiment, the financial institution processor (e.g., issuing bank) determines the best accounts by calculation when it receives a specific service request. Alternatively, the financial institution processor may choose the best accounts on the basis of their priority levels that have previously been assigned and recorded in the processor. In this case, the customer may define the priority levels of his/her accounts through an electronic wallet device, ATM, or any other appropriate terminal device.

The present invention further allows the customer to specify the members of an organized account group through an electronic wallet device, ATM, or any other appropriate terminal device, in the case that the best accounts are determined by a financial institution processor.

Regarding the best account selection, the correspondent bank processor may be configured to perform the selection by itself. Generally, financial institutions are unwilling to disclose the information about their customer accounts to other establishments. It is therefore preferable that each correspondent bank choose the best accounts locally, when the customer has two or more accounts there.

To perform an account selection by itself, the correspondent bank processor is required to have the following three functions. First, the processor needs a priority setting function which assigns appropriate priority levels to a plurality of accounts that a single customer opened. Second, the processor needs a target account selection function which determines a target account by selecting one of the accounts that has a higher priority level, in response to a service request asking for a manipulation of monetary data that is owned by the customer. Third, the processor needs a monetary data manipulation function which manipulates the monetary data held in the target account that has been selected by the target account selection function. This third function is triggered by a service request asking for a manipulation of an account that is owned by a specific customer. The service request may originate from a monetary data management unit managing data about a plurality of accounts that an account holder opened at a plurality of financial institution processors. With the above functions implemented in its processor, the correspondent bank can provide their customer with best account selection services.

The above-described various processing mechanisms are actually implemented as software functions of a computer system. In that case, the proposed processing steps are encoded in tile form of computer programs, which can be stored in a computer-readable storage medium. The computer system executes those programs to provide the intended functions of the present invention. Suitable computer-readable storage media include magnetic storage media and semiconductor memory devices. Portable storage media, such as CD-ROMs and floppy disks, are also suitable for circulation purposes. Further, it will be possible to distribute the programs through an appropriate server computer deployed on a network. Program files delivered to users are normally installed in their computers' hard drive or other local mass storage devices, which will be executed after being loaded to the main memory.

According to the present invention, the proposed system is designed to make access to a plurality of accounts that a customer opened at different financial institutions. By using those accounts in an organized way as described so far, the customer can make a payment successfully as long as some of the organized accounts hold a sufficient amount of funds. Further, the system utilizes the customer's surplus funds effectively, since its policy of source account selection is to maximize the benefits to the customer.

As seen from the above explanation, the present invention provides several advantages as follows. The present invention proposes a payment system which prioritizes a plurality of accounts held at different financial institutions on the basis of their advantages to the customer. In response to a specific service request, the system automatically chooses an appropriate target account with a higher priority level from among those that have been as an organized account group, thus helping the customer yield the best performance from his/her accounts.

The present invention also proposes an electronic wallet device which prioritizes a plurality of accounts held at different financial institutions on the basis of their advantages to the customer. When a specific service is demanded, the device automatically chooses an appropriate target account with a higher priority level from among those that have been as an organized account group, and sends a service request to the target account. This feature helps the customer yield the best performance from his/her accounts.

Further, the present invention proposes a first financial institution processor which prioritizes a plurality of accounts held at different financial institutions on the basis of their advantages to the customer. In response to a specific service request, the processor automatically chooses an appropriate target account with a higher priority level. If the target account resides in itself, the processor executes the requested service. If not, the processor forwards the request to another financial institution that manages the target account. With this feature, the customer can use his/her accounts in an organized manner, thus yielding the best performance from them.

In addition, the present invention provides a second financial institution processor that is designed to manipulate a customer account in response to a service request sent from a monetary data management unit that demands a manipulation of that account. This service request actually comes from another financial institution processor which has chosen an appropriate target account with a higher priority level from among those that have been as an organized account group. The two financial institution processors work together, as part of a payment system which uses a plurality of financial institutions in an organized way.

Moreover, the present invention provides an electronic wallet management unit which prioritizes a plurality of accounts held at different financial institutions on the basis of their advantages to the customer. When a specific service is demanded from the owner of an electronic wallet device, the management unit automatically chooses an appropriate target account with a higher priority level from among those that have been as an organized account group, and sends a service request to the target account. This feature helps the wallet owner yield the best performance from his/her accounts.

Furthermore, the present invention provides a computer-readable medium storing an account management program according to the present invention. Running on an appropriate computer, the proposed account management program prioritizes a plurality of accounts held at different financial institutions on the basis of their advantages to the customer. In response to a specific service request, the computer automatically chooses an appropriate target account with a higher priority level from among those that have been as an organized account group, thus helping the customer yield the best performance from his/her accounts.

**Claims**

**1.** A payment system which manages accounts held at a plurality of financial institution processors, comprising:

account data management means for managing data about a plurality of accounts that a single customer opened at the plurality of financial institution processors;
priority setting means for determining priority levels of the plurality of accounts;
target account selection means for determining a target account by selecting one of the accounts that has a higher priority level, in response to a service request asking for a manipulation of monetary data that is owned by the customer; and
monetary data manipulating means for manipulating, according to the service request, the monetary data held in the target account that has been selected by said target account selection means.

**2.** The payment system according to claim 1, wherein:

said target account selection means selects new target accounts successively from the plurality of accounts in descending order of the priority level, until the service request is fulfilled; and
said monetary data manipulating means successively manipulates the monetary data held in the target accounts selected by said target account selection means, to fulfil the service request.

3. The payment system according to claim 1, wherein said monetary data manipulating means withdraws money from the target account in response the service request.

4. The payment system according to claim 1, wherein said monetary data manipulating means deposits money to the target account in response the service request.

5. The payment system according to claim 1, wherein said monetary data manipulating means freezes monetary data in the target account according to the service request.

6. The payment system according to claim 1, wherein said priority setting means, in response to a priority setting request concerning specific accounts, determines the priority levels of the specified accounts by evaluating how each account is advantageous to the customer based on a given criterion.

7. The payment system according to claim 6, wherein said priority setting means uses interest rates of the specified accounts as the criterion for evaluating how each account is advantageous to the customer.

8. The payment system according to claim 6, wherein said priority setting means uses the balance of each specified account as the criterion for evaluating how each account is advantageous to the customer.

9. The payment system according to claim 6, wherein said priority setting means uses account types as the criterion for evaluating how each account is advantageous to the customer.

10. An electronic wallet device which transfers monetary data, comprising:

    account data management means for managing data about a plurality of accounts that an owner of the electronic wallet device opened at the plurality of financial institution processors;
    priority setting means for determining priority levels of the plurality of accounts;
    target account selection means for determining a target account by selecting one of the accounts that has a higher priority level, in response to a service request asking for a manipulation of monetary data held in the accounts of the owner; and
    monetary data manipulation requesting means for sending an execution request to one of the financial institution processors which holds the target account selected by said target account selection means, the execution request asking for execution of the manipulation specified in the service request.

11. The electronic wallet device according to claim 10, wherein:

    said target account selection means selects new target accounts successively from the plurality of accounts in descending order of the priority level, until the service request is fulfilled; and
    said monetary data manipulation requesting means successively sends the execution request to the financial institution processors holding the target accounts selected by said target account selection means, to have the service request fulfilled with the target accounts.

12. The electronic wallet device according to claim 10, wherein said monetary data manipulation requesting means sends a fund withdrawal request in response to the service request, to take money out of the target account.

13. The electronic wallet device according to claim 10, wherein said monetary data manipulation requesting means sends a fund depositing request in response to the service request, to put money into the target account.

14. The electronic wallet device according to claim 10, wherein said monetary data manipulation requesting means sends a fund freezing request in response to the service request, to freeze money in the target account.

15. The electronic wallet device according to claim 10, wherein said priority setting means, in response to a priority setting request concerning specific accounts, determines the priority levels of the specified accounts by evaluating how each account is advantageous to a customer based on a given criterion.

16. The electronic wallet device according to claim 15, wherein said priority setting means uses interest rates of the specified accounts as the criterion for evaluating how each account is advantageous to the customer..

**17.** The electronic wallet device according to claim 15, wherein said priority setting means uses the balance of each specified account as the criterion for evaluating how each account is advantageous to the customer..

**18.** The electronic wallet device according to claim 15, wherein said priority setting means uses account types as the criterion for evaluating how each account is advantageous to the customer..

**19.** A financial institution processor which manages customer account information at a financial institution, comprising:

account data management means for managing data about a plurality of accounts that a single customer opened at the financial institution processor itself, as well as at other financial institution processors;
priority setting means for determining priority levels of the plurality of accounts;
target account selection means for determining a target account by selecting one of the accounts that has a higher priority level, in response to a service request asking for a manipulation of monetary data that is owned by the customer;
monetary data manipulating means for manipulating, according to the service request, the monetary data held in the target account that has been selected by said target account selection means, if the selected target account is held at the financial institution processor itself; and
monetary data manipulation requesting means for sending an execution request to one of the other financial institution processors which holds the target account selected by said target account selection means, the execution request asking for execution of the manipulation specified in the service request, if the selected target account is held at the other financial institution processors.

**20.** The financial institution processor according to claim 19, wherein:

said target account selection means selects new target accounts successively from the plurality of accounts in descending order of the priority level, until the service request is fulfilled; and
said monetary data manipulating means successively manipulates the monetary data held in the selected target accounts, to fulfil the service request.
said monetary data manipulation requesting means successively sends the execution request to the other financial institution processors holding the selected target accounts, to have the service request fulfilled with the selected target accounts.

**21.** The financial institution processor according to claim 19, wherein:

said monetary data manipulating means sends a fund withdrawal request in response to the service request, to take money out of the target account; and
said monetary data manipulation requesting means sends a fund withdrawal request in response to the service request, to take money out of the target account.

**22.** The financial institution processor according to claim 19, wherein:

said monetary data manipulating means sends a fund depositing request in response to the service request, to put money into the target account; and
said monetary data manipulation requesting means sends a fund depositing request in response to the service request, to put money into the target account.

**23.** The financial institution processor according to claim 19, wherein:

said monetary data manipulating means sends a fund freezing request in response to the service request, to freeze money in the target account; and
said monetary data manipulation requesting means sends a fund freezing request in response to the service request, to freeze money in the target account.

**24.** The financial institution processor according to claim 19, wherein said priority setting means, in response to a priority setting request concerning specific accounts, determines the priority levels of the specified accounts by evaluating how each account is advantageous to the customer based on a given criterion.

**25.** The financial institution processor according to claim 24, wherein said priority setting means uses interest rates of the specified accounts as the criterion for evaluating how each account is advantageous to the customer.

**26.** The financial institution processor according to claim 24, wherein said priority setting means uses the balance of each specified account as the criterion for evaluating how each account is advantageous to the customer.

**27.** The financial institution processor according to claim 24, wherein said priority setting means uses account types as the criterion for evaluating how each account is advantageous to the customer.

**28.** A financial institution processor which manages customer account information in a specific financial institution, being coupled to a monetary data management unit managing data about a plurality of accounts that an account holder opened at a plurality of financial institution processors, the financial institution processor comprising

monetary data manipulating means, responsive to a service request asking for a manipulation of an account that is owned by a specific customer, for manipulating the account to execute the service request.

**29.** The financial institution processor according to claim 28, further comprising:

priority setting means for determining priority levels of the plurality of accounts that a single customer opened; and
target account selection means for determining a target account by selecting one of the accounts that has a higher priority level, in response to a service request asking for a manipulation of monetary data that is owned by the customer,
wherein said monetary data manipulating means manipulates the monetary data held in the target account selected by said target account selection means, to fulfil the service request.

**30.** An electronic wallet management unit which supports transfer of monetary data between an electronic wallet device and other devices, comprising:

account data management means for managing data about a plurality of accounts that an owner of the electronic wallet device opened at the plurality of financial institution processors;
priority setting means for determining priority levels of the plurality of accounts;
target account selection means for determining a target account by selecting one of the accounts that has a higher priority level, in response to a service request asking for a manipulation of monetary data held in the plurality of accounts; and
monetary data manipulation requesting means for sending an execution request to one of the financial institution processors which holds the target account selected by said target account selection means, the execution request asking for execution of the manipulation specified in the service request.

**31.** The electronic wallet management unit according to claim 30, wherein:

said target account selection means selects new target accounts successively from the plurality of accounts in descending order of the priority level, until the service request is fulfilled; and
said monetary data manipulation requesting means successively sends the execution request to the financial institution processors holding the target accounts selected by said target account selection means, to have the service request fulfilled with the selected target accounts.

**32.** The electronic wallet management unit according to claim 30, wherein said monetary, data manipulation requesting means sends a fund withdrawal request in response to the service request, to take money out of the target account.

**33.** The electronic wallet management unit according to claim 30, wherein said monetary data manipulation requesting means sends a fund depositing request in response to the service request, to put money into the target account.

**34.** The electronic wallet management unit according to claim 30, wherein said monetary data manipulation requesting means sends a fund freezing request in response to the service request, to freeze money in the target account.

**35.** The electronic wallet management unit according to claim 30, wherein said priority setting means, in response to a priority setting request concerning specific accounts, determines the priority levels of the specified accounts by evaluating how each account is advantageous to the customer based on a given criterion.

36. The electronic wallet management unit according to claim 35, wherein said priority setting means uses interest rates of the specified accounts as the criterion for evaluating how each account is advantageous to the customer.

37. The electronic wallet management unit according to claim 35, wherein said priority setting means uses the balance of each specified account as the criterion for evaluating how each account is advantageous to the customer.

38. The electronic wallet management unit according to claim 35, wherein said priority setting means uses account types as the criterion for evaluating how each account is advantageous to the customer.

39. A computer-readable medium storing an account management program which manages accounts held at a plurality of financial institution processors, the program causing a computer to function as:

    account data management means for managing data about a plurality of accounts that a single customer opened at the plurality of financial institution processors;
    priority setting means for determining priority levels of the plurality of accounts;
    target account selection means for determining a target account by selecting one of the accounts that has a higher priority level, in response to a service request asking for a manipulation of monetary data that is owned by the customer; and
    monetary data manipulating means for manipulating, according to the service request, the monetary data held in the target account that has been selected by said target account selection means.

40. A computer-readable medium storing an account management program which manages transactions performed via a financial institution, the program causing a computer in an electronic wallet device to function as:

    account data management means for managing data about a plurality of accounts that an owner of the electronic wallet device opened at the plurality of financial institution processors;
    priority setting means for determining priority levels of the plurality of accounts;
    target account selection means for determining a target account by selecting one of the accounts that has a higher priority level, in response to a service request asking for a manipulation of monetary data held in the accounts of the owner; and
    monetary data manipulation requesting means for sending an execution request to one of the financial institution processors which holds the target account selected by said target account selection means, the execution request asking for execution of the manipulation specified in the service request.

41. A computer-readable medium storing an account management program which manages customer account information at a financial institution, the program causing a computer to function as:

    account data management means for managing data about a plurality of accounts that a single customer opened at the financial institution processor itself, as well as at other financial institution processors;
    priority setting means for determining priority levels of the plurality of accounts;
    target account selection means for determining a target account by selecting one of the accounts that has a higher priority level, in response to a service request asking for a manipulation of monetary data held in the accounts of the owner;
    monetary data manipulating means for manipulating, according to the service request, the monetary data held In the target account that has been selected by said target account selection means, if the selected target account Is held at the financial institution processor itself; and
    monetary data manipulation requesting means for sending an execution request to one of the other financial institution processors which holds the target account selected by said target account selection means, the execution request asking for execution of the manipulation specified in the service request, if the selected target account is held at the other financial institution processors.

42. A computer-readable medium storing an account management program which manages customer account information in a specific financial institution in cooperation with a monetary data management unit managing data about a plurality of accounts that an account holder opened at a plurality of financial institution processors, the program causing a computer to function as:

monetary data manipulating means, responsive to a service request asking for a manipulation of an account that is owned by a specific customer, for manipulating the account to execute the service request.

**43.** A computer-readable medium storing an account management program which manages accounts of an owner of an electronic wallet device when executed in an electronic wallet management unit supporting transfer of monetary data between the electronic wallet device and other devices, the program causing a computer to function as:

account data management means for managing data about a plurality of accounts that the owner of the electronic wallet device opened at a plurality of financial institution processors;

priority setting means for determining priority levels of the plurality of accounts;

target account selection means for determining a target account by selecting one of the accounts that has a higher priority level, in response to a service request asking for a manipulation of monetary data held in the plurality of accounts; and

monetary data manipulation requesting means for sending an execution request to one of the financial institution processors which holds the target account selected by said target account selection means, the execution request asking for execution of the manipulation specified in the service request.

FIG. 1

51 ELECTRONIC
WALLET DEVICE
(SLAVE)

52

42 POS

43 PERSONAL COMPUTER

53

41 ELECTRONIC
WALLET DEVICE
(MASTER)

11 ELECTRONIC
WALLET
MANAGEMENT
DATABASE

58

10 ELECTRONIC
WALLET
MANAGEMENT
UNIT

12 FINANCIAL
INSTITUTION
MANAGEMENT
DATABASE

48 ATM

31 ACCOUNT
MANAGEMENT
DATABASE

21 ACCOUNT
MANAGEMENT
DATABASE

30 FINANCIAL
INSTITUTION
PROCESSOR

32 ELECTRONIC
WALLET
DEVICE
MANAGER

20 FINANCIAL
INSTITUTION
PROCESSOR

22 ELECTRONIC
WALLET
DEVICE
MANAGER

54

56

57

44 ATM

45 PERSONAL
COMPUTER

55

46 ATM

47 PERSONAL
COMPUTER

FIG. 2

| Common Control Segment | | | |
|---|---|---|---|
| Electronic Wallet Management Data Segment | Electronic Wallet ID (Issuance No.) | | |
| | Date of Issue | Valid Period | |
| | Issuer Name | Issuer Code | |
| | User Authentication Data | Type of Electronic Wallet | |
| | Date of Latest Transaction | Latest Transaction Log | |
| | Next Scheduled Reset | Reset Type | Reset Interval |
| User Management Data Segment | Private Data | | |
| | User Authentication Data | | |
| | Network Management Data | | |
| Transaction Management Data Segment | Transaction Management Sub-segment | | |
| | Authentication Center Data | | |
| | Transaction Management Center Data | | |
| | Financial Institution Data | | |
| | Credit Card Company Data | | |
| | House Card Company Data | | |
| Backup Data Segment | | | |
| Reissue Data Segment | | | |
| Money Management Data Segment | Money Control Sub-segment | | |
| | Money Management Sub-segment | | |
| Check/Bill Management Data Segment | Check/Bill Control Sub-segment | | |
| | Owner's Check Management Sub-segment | | |
| | Received Check Management Sub-segment | | |

# FIG. 3

EP 1 081 628 A1

| Financial Institution Name | | Financial Institution Code | |
|---|---|---|---|
| Sales Office Name | | Sales Office Code | |
| Sub-password | | Password Role | |

Financial Institution Data Sub-segment

| Account Data Set | Account Number | Account Type | Currency Type |
|---|---|---|---|
| | Date and Time of Last Transaction | Account Balance | |
| | Credit Limit | Amount Used | |
| | Date of Account Opening | Personal Key ID | |
| | Date of Card Issuance | Date of Card Re-issuance | |
| | Account Management Status | Date of Deposit Reception | |
| | Interest Rate | Priority Level | |

# FIG. 4

| Credit Card Company Data Sub-segment | | |
|---|---|---|
| | Credit Card Company Name | Credit Card Company Code |
| | Sub-password | Password Role |
| | Account Number | Account Type |
| | Date of Credit Account Opening | Personal Key ID |
| | Date of Card Issuance | Date of Card Re-issuance |
| | Date and Time of Last Transaction | Valid Period of Credit Card |
| | Credit Limit | Amount Used |
| | Limit of Cash Advance | Amount of Cash Advance Used |
| | Account Management Status | Date of Debit Payment |
| | Interest Rate | Priority Level |
| | Address of Source Account Data | |

FIG. 5

EP 1 081 628 A1

| House Card Company Data Sub-segment | House Card Company Name | House Card Company Code |
|---|---|---|
| | Sub-password | Password Role |
| | Account Number | Account Type |
| | Date of Credit Account Opening | Personal Key ID |
| | Date of Card Issuance | Date of Card Re-issuance |
| | Date and Time of Last Transaction | Valid Period of House Card |
| | Credit Limit | Amount Used |
| | Limit of Cash Advance | Amount of Cash Advance Used |
| | Account Management Status | Date of Debit Payment |
| | Interest Rate | Priority Level |
| | Address of Credit Card Company Data Sub-segment | |

FIG. 6

EP 1 081 628 A1

→ USED FOR DEBIT PAYMENT OF CREDIT CARD OR NOT

→ USED FOR DEBIT PAYMENT OF HOUSE CARD OR NOT

→ CHECKING ACCOUNT OR NOT

→ ALLOW OVERDRAFT OR NOT

→ HAVE A FIXED SETTLEMENT DATE OR NOT

→ BELONG TO ORGANIZED ACCOUNT GROUP OR NOT

→ DORMANT OR NOT

→ RECEIVE REGULAR DEPOSIT OR NOT

## FIG. 7

FIG. 8

EP 1 081 628 A1

```
                    ( a )
                      │
                      ▼
        ┌──────────────────────────┐
        │      SELECT BANK         │────S21
        │ ACCOUNT AUTOMATICALLY    │
        └──────────────────────────┘
                      │        ┌─S22
                      ▼        │      YES
              ◇─────────────◇──────────────────┐
              │  ANY ERROR? │                  │
              ◇─────────────◇                  │
    ┌──────────────│ NO                        │
    │              ▼                           │
    │  S23  ┌──────────────────────┐           │
    │       │ PICK UP ONE ACCOUNT  │           │
    │       │ IN THE ORDER OF      │           │
    │       │ PRIORITY             │           │
    │       └──────────────────────┘           │
    │       S24     │                          │
    │          ◇────────────────◇   NO         │
    │          │ ACCOUNT IS      │──────┐      │
    │          │ FOUND?          │      │      │
    │          ◇────────────────◇       ▼      │
    │               │ YES      ┌──────────────┐│
    │  S26  ┌──────────────┐   │ SET ERROR    ││──S25
    │       │ SEND         │   │ FLAG         ││
    │       │ WITHDRAWAL   │   └──────────────┘│
    │       │ PARAMETERS   │          │        │
    │       │ TO ATM       │          │        │
    │       └──────────────┘          │        │
    │  S27  ┌──────────────────┐      │        │
    │       │ WAIT FOR         │      │        │
    │       │ INTERRUPT FROM   │      │        │
    │       │ ATM              │      │        │
    │       └──────────────────┘      │        │
    │  S28      │                     │        │
    │  NO  ◇────────────────◇         │        │
    │ ┌────│ NORMAL END?     │        │        │
    │ │    ◇────────────────◇         │        │
    │ │S30       │ YES                │        │
    │ ▼          │                    │        │
    │┌──────────────┐                 │        │
    ││ CALL         │                 │        │
    ││ REQUIRED     │                 │        │
    ││ AMOUNT       │                 │        │
    ││ UPDATING     │                 │        │
    ││ ROUTINE      │                 │        │
    │└──────────────┘      S29        │        │
    │     │    ┌──────────────────┐   │        │
    │     │    │ CALL ELECTRONIC  │───┘        │
    │     │    │ WALLET DATA      │            │
    │     │    │ UPDATING ROUTINE │            │
    │     │    └──────────────────┘            │
    │   ( b )         │                        │
    │                 ▼                        │
    │             ( END )◄─────────────────────┘
```

FIG. 9

START OF WITHDRAWAL
COMMAND ENTRY ROUTINE

WAIT FOR
INTERRUPT FROM ATM ⟋S41

DISPLAY WITHDRAWAL
COMMAND MENU ⟋S42

WAIT FOR INPUT ⟋S43

RECEIVE REQUIRED AMOUNT
AND ACCOUNT
SELECTION METHOD ⟋S44

INITIALIZE DATA
AREA FOR AMOUNT
CONFIRMATION ROUTINE ⟋S45

END

FIG. 10

┌─────────────────────────────────────────────────┐ —100
│                                                   │
│   ① AMOUNT TO BE WITHDRAWN                        │
│                                              ┌────────┐ —101
│                                              │        │
│                                              └────────┘ YEN
│                                                   │
│                                                   │
│   ② BANK ACCOUNT SELECTION                        │
│      (CHOOSE EITHER METHOD)                        │
│                                    ┌──────────────┐ —102
│                                    │ INTERACTIVE SELECTION │
│                                    └──────────────┘
│                                    ┌──────────────┐ —103
│                                    │ AUTOMATIC SELECTION │
│                                    └──────────────┘
│                                                   │
└─────────────────────────────────────────────────┘

FIG. 11

START OF CONTINUATION
CONFIRMATION ROUTINE

DISPLAY RESULT OF PREVIOUS
STEP AND ASK WHETHER
TO CONTINUE THE PROCESS — S51

WAIT FOR INPUT — S52

DECIDE WHETHER TO
CONTINUE OR STOP — S53

END

FIG. 12

111

110

● INSUFFICIENT DEPOSIT

112

BALANCE = [          ] YEN

113

REQUIRED AMOUNT = [          ] YEN

114

● TRY ANOTHER BANK ACCOUNT?

○ YES          ○ NO

115          116

# FIG. 13

START OF ELECTRONIC
WALLET DATA UPDATING ROUTINE

UPDATE FINANCIAL INSTITUTION
DATA SUB-SEGMENT — S61

UPDATES MONEY MANAGEMENT
DATA SEGMENT — S62

END

# FIG. 14

START OF REQUIRED
AMOUNT UPDATING
ROUTINE

UPDATE DATA FOR
CONFIRMATION DIALOG — S71

CALCULATE AMOUNT
TO BE WITHDRAWN
FROM NEXT ACCOUNT — S72

END

FIG. 15

EP 1 081 628 A1

START OF ORGANIZED ACCOUNT
REGISTRATION PROCESS

S101 — CALL REGISTRATION
METHOD SELECTION
ROUTINE

S102 — CALL MANUAL ACCOUNT REGISTRATION ROUTINE

S103 — CALL MANUAL PRIORITY SETTING ROUTINE

S104 — CALL AUTOMATED PRIORITY SETTING ROUTINE

S105 — CALL HOST-ASSISTED PRIORITY SETTING ROUTINE

S106 — CALL AUTOMATED ACCOUNT REGISTRATION AND PRIORITY SETTING ROUTINE

S107 — CALL HOST-ASSISTED ACCOUNT REGISTRATION AND PRIORITY SETTING ROUTINE

S108 — ANY ERROR?

YES

NO

S109 — HOST UPDATES ITS LOCAL DATA

S110 — ELECTRONIC WALLET DEVICE UPDATES ITS LOCAL DATA

END

FIG. 16

START OF REGISTRATION
METHOD SELECTION ROUTINE

DISPLAY REGISTRATION
METHOD SELECTION MENU — S121

WAIT FOR INPUT — S122

CUSTOMER ENTERS
HIS/HER CHOICE — S123

INITIATE EXECUTION
OF SPECIFIED
REGISTRATION ROUTINE

FIG. 17

CHOOSE ONE OF THE FOLLOWING METHODS

121 — (1) MANUAL ACCOUNT SELECTION

122 — (2) MANUAL PRIORITY SETTING

123 — (3) AUTOMATED PRIORITY SETTING

124 — (4) HOST-ASSISTED PRIORITY SETTING

NUMBER OF ACCOUNTS — 125a

125 — (5) AUTOMATED ACCOUNT SELECTION
AND PRIORITY SETTING

NUMBER OF ACCOUNTS — 126a

126 — (6) HOST-ASSISTED ACCOUNT SELECTION
AND PRIORITY SETTING

120

FIG. 18

EP 1 081 628 A1

42

FIG. 19

```
                                              ┌─130

    ┌─────────────────────────────────────────────┐
    │  ┌──────────────────────┐                    │
    │  │ ACCOUNT INFORMATION  │                    │
    │  └──────────────────────┘          ┌─131     │
    │                                              │
    │    BANK              BRANCH                   │
    │    ACCOUNT NUMBER    TYPE                     │
    │    INTEREST RATE     BALANCE                  │
    │                                    ┌─132      │
    │         ADD THIS ACCOUNT TO                   │
    │     THE ORGANIZED ACCOUNT GROUP?              │
    │       O YES          O NO                     │
    └─────────────────────────────────────────────┘
           └─132a          └─132b
```

# FIG. 20

START OF MANUAL
PRIORITY SETTING ROUTINE

SCAN FINANCIAL INSTITUTION
DATA SUB-SEGMENT AND
EXTRACT ALL GROUP MEMBERS
(ACCOUNT MANAGEMENT
STATUS SHOWS MEMBERSHIPS) — S151

PRESENT DIALOG FOR
ACCOUNT DATA VIEWING
AND PRIORITY DATA ENTRY — S152

WAIT FOR INPUT — S153

DISPLAY ACCOUNT
PARAMETERS AND
CONFIRMATION MESSAGE — S154

WAIT FOR INPUT — S155

CHECK INPUT — S156

S157
NO     POSITIVE RESPONSE?

S158
YES    POSSIBLE TO CONTINUE?     YES

S159
NO
SET ERROR FLAG

END

FIG. 21

FIG. 22

EP 1 081 628 A1

START OF AUTOMATED
PRIORITY SETTING ROUTINE

SCAN FINANCIAL INSTITUTION
DATA SUB-SEGMENT AND
EXTRACT ALL GROUP MEMBERS
(ACCOUNT MANAGEMENT
STATUS SHOWS MEMBERSHIPS) —S161

DETERMINE PRIORITY
LEVELS AUTOMATICALLY —S162

PRESENT DIALOG FOR
ACCOUNT DATA VIEWING
AND PRIORITY DATA ENTRY —S163

WAIT FOR INPUT —S164

CHECK INPUT —S165

S166

POSITIVE RESPONSE? — NO

YES — S167

SET ERROR FLAG

END

FIG. 23

| Priority | | Interest Rate | | Amount of | Expiration |
| | | Fixed | Variable | Balance | Date |
|---|---|---|---|---|---|
| High | Main Settlement Account | | | | |
| | Liquid Deposit Accounts | Low ↓ High | Low ↓ High | Small ↓ Large | |
| | Accounts with Overdraft or Cash Advance Facilities | Low ↓ High | Low ↓ High | Small ↓ Large | |
| | Credit Accounts | Low ↓ High | Low ↓ High | Small ↓ Large | |
| Low | Time Deposit Accounts and Savings Accounts | Low ↓ High | Low ↓ High | Small ↓ Large | Distant ↓ Close |

# FIG. 24

FIG. 25

| USE THIS SETUP? ○ YES ○ NO | | | | | | | | |
| 151 152 | | | | | | | | 150 |
| BANK | BRANCH OFFICE | ACCOUNT NO. | TYPE | INTEREST RATE TYPE | INTEREST RATE | BALANCE | EXPIRATION DATE | PRIORITY |
|---|---|---|---|---|---|---|---|---|
|  |  |  |  |  |  |  |  |  |
|  |  |  |  |  |  |  |  |  |
|  |  |  |  |  |  |  |  |  |

EP 1 081 628 A1

START OF HOST-ASSISTED
PRIORITY SETTING ROUTINE

SCAN FINANCIAL INSTITUTION
DATA SUB-SEGMENT AND
EXTRACT ALL GROUP MEMBERS
(ACCOUNT MANAGEMENT
STATUS SHOWS MEMBERSHIPS) ⌐S171

SEND DATA TO HOST VIA ATM ⌐S172

WAIT FOR INTERRUPT FROM ATM ⌐S173

RECEIVE LATEST ACCOUNT
INFORMATION FROM HOST ⌐S174

DETERMINE PRIORITY
LEVELS AUTOMATICALLY ⌐S175

PRESENT DIALOG FOR
ACCOUNT DATA VIEWING
AND PRIORITY DATA ENTRY ⌐S176

WAIT FOR INPUT ⌐S177

CHECK INPUT ⌐S178

POSITIVE RESPONSE? ⌐S179

NO

SET ERROR FLAG ⌐S180

YES

END

FIG. 26

50

START OF AUTOMATED
ACCOUNT REGISTRATION AND
PRIORITY SETTING ROUTINE

SCAN FINANCIAL INSTITUTION
DATA SUB-SEGMENT AND
EXTRACT ALL GROUP MEMBERS — S181

ASSIGN PRIORITY LEVELS TO
ALL EXTRACTED ACCOUNTS — S182

SUMMARIZE HIGHER PRIORITY
ACCOUNTS (AS MANY
ACCOUNTS AS SPECIFIED),
AND REQUEST CONFIRMATION — S183

WAIT FOR INPUT — S184

CHECK INPUT — S185

S186 — POSITIVE RESPONSE? — NO

YES

SET ERROR FLAG — S187

END

FIG. 27

```
        ┌─────────────────────────┐
        │   START OF HOST-ASSISTED │
        │ ACCOUNT REGISTRATION AND │
        │  PRIORITY SETTING ROUTINE│
        └─────────────────────────┘
                    │
                    ▼
        ┌─────────────────────────┐
        │ SCAN FINANCIAL INSTITUTION│──── S191
        │    DATA SUB-SEGMENT AND   │
        │  EXTRACT ALL GROUP MEMBERS│
        └─────────────────────────┘
                    │
                    ▼
        ┌─────────────────────────┐
        │  SEND DATA TO HOST VIA ATM│──── S192
        └─────────────────────────┘
                    │
                    ▼
        ┌─────────────────────────┐
        │ WAIT FOR INTERRUPT FROM ATM│──── S193
        └─────────────────────────┘
                    │
                    ▼
        ┌─────────────────────────┐
        │   RECEIVE LATEST ACCOUNT │──── S194
        │   INFORMATION FROM HOST  │
        └─────────────────────────┘
                    │
                    ▼
        ┌─────────────────────────┐
        │   DETERMINE PRIORITY     │──── S195
        │  LEVELS OF ALL ACCOUNTS  │
        └─────────────────────────┘
                    │
                    ▼
        ┌─────────────────────────┐
        │  SUMMARIZE HIGHER PRIORITY│──── S196
        │    ACCOUNTS (AS MANY     │
        │   ACCOUNTS AS SPECIFIED),│
        │  AND REQUEST CONFIRMATION│
        └─────────────────────────┘
                    │
                    ▼
        ┌─────────────────┐
        │  WAIT FOR INPUT │──── S197
        └─────────────────┘
                    │
                    ▼
        ┌─────────────────┐
        │   CHECK INPUT   │──── S198
        └─────────────────┘
                    │
                    ▼                S199
            ◇─────────────────◇          NO
            │ POSITIVE RESPONSE?│────────────┐
            ◇─────────────────◇             │   S200
                    │ YES              ┌──────────────┐
                    │                  │ SET ERROR FLAG│
                    │                  └──────────────┘
                    │                         │
                    ▼◄────────────────────────┘
              (  END  )
```

FIG. 28

EP 1 081 628 A1

FIG. 29

START OF BEST SOURCE
ACCOUNT SELECTION

S301

COLLECT ACCOUNT INFORMATION,
INCLUDING THOSE IN OTHER
FINANCIAL INSTITUTIONS

S302

EXTRACT LIQUID DEPOSIT ACCOUNTS

S303

SORT ALL ACCOUNTS IN THE ORDER OF:
INTEREST RATES: FROM LOW TO HIGH
BALANCE: FROM SMALL TO LARGE

PICK UP ACCOUNT    S304

S305

ACCOUNT EXISTS?    NO    c

YES

S306

TOTAL AMOUNT =
TOTAL AMOUNT + ACCOUNT BALANCE

S307

NO    REQUIRED
AMOUNT ≦ TOTAL
AMOUNT?

YES

f

FIG. 30

EP 1 081 628 A1

( c )

EXTRACT CHECKING ACCOUNTS — S311

SORT ALL ACCOUNTS IN THE ORDER OF: — S312
– INTEREST RATES (FROM LOW TO HIGH)
– ALLOWABLE OVERDRAFT
(FROM SMALL TO LARGE)

PICK UP ACCOUNT — S313

ACCOUNT EXISTS? — S314 → NO → ( d )

YES

TOTAL AMOUNT = — S315
TOTAL AMOUNT + ALLOWABLE OVERDRAFT

REQUIRED AMOUNT ≦ TOTAL AMOUNT? — S316

NO

YES

( f )

FIG. 31

55

( d )

↓

EXTRACT ACCOUNTS WITH LOAN
OR CASH ADVANCE FACILITIES  ⌐S321

↓

SORT ALL ACCOUNTS IN THE ORDER OF:  ⌐S322
– INTEREST RATES (FROM LOW TO HIGH)
– POSSIBLE LOAN OR CASH ADVANCE
(FROM SMALL TO LARGE)

↓

PICK UP ACCOUNT  ⌐S323

↓

ACCOUNT EXISTS?  ⌐S324 ——NO——→ ( e )

↓ YES

TOTAL AMOUNT =  ⌐S325
TOTAL AMOUNT + POSSIBLE LOAN
OR CASH ADVANCE

↓

REQUIRED  ⌐S326
AMOUNT ≦ TOTAL
AMOUNT?  ←NO

↓ YES

( f )

# FIG. 32

e

S331

EXTRACT TIME DEPOSIT ACCOUNTS
AND SAVINGS ACCOUNTS

S332

CALCULATE EXPECTED INTEREST,
ASSUMING CANCELLATION,
AND THEN CALCULATE EXPECTED LOSS

S333

SORT ACCOUNTS IN ASCENDING
ORDER OF EXPECTED LOSS

S334

PICK UP ACCOUNT

S335

ACCOUNT EXISTS? — NO

YES

S337

TOTAL AMOUNT =
TOTAL AMOUNT + REMAINING CREDIT

S338

REQUIRED
AMOUNT ≦ TOTAL
AMOUNT?

NO

S336

SEND MESSAGE "UNABLE
TO EXECUTE PAYMENT"

f

YES

END

FIG. 33

57

**FIG. 34**

74 — CORRESPONDENT BANK PROCESSOR

S407 / S418 — EXECUTE PROVISIONAL WITHDRAWAL

EXECUTE WITHDRAWAL

75 — CREDIT CARD COMPANY PROCESSOR

S410 / S421 — EXECUTE PROVISIONAL PAYMENT

EXECUTE PAYMENT

S406, S408, S417, S419, S409, S411, S420, S422

72 — ISSUING BANK PROCESSOR

S403 — VALIDATE RECEIVED CHECK

S404 — SELECT BEST SOURCE ACCOUNT

S405 — EXECUTE PROVISIONAL WITHDRAW FROM LOCAL DEPOSIT ACCOUNT

S412 — EXECUTE CHECK MANAGEMENT AND SUSPENSION OF TRANSFER

S416 — EXECUTE FINAL WITHDRAWAL

S423 — PREPARE BANK STATEMENT

S425

73 — SELLER'S BANK PROCESSOR

DEPOSIT FUND INTO ACCOUNT

S426

S427

STORE B

CUSTOMER A

71 — ELECTRONIC WALLET DEVICE

S415, S424

S413, S402

S401

S414

ABC SHOP

TERMINAL — 76

EP 1 081 628 A1

58

## INTERNATIONAL SEARCH REPORT

| International application No. |
|---|
| PCT/JP99/00282 |

| A. CLASSIFICATION OF SUBJECT MATTER |
|---|
| Int.Cl⁶ G06F19/00, G07F19/00 |
| According to International Patent Classification (IPC) or to both national classification and IPC |

| B. FIELDS SEARCHED |
|---|
| Minimum documentation searched (classification system followed by classification symbols) |
| Int.Cl⁶ G06F19/00, G07F19/00 |

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)
JICST File on Science and Technology (Kin' yuu Kikan, Ginkou, Denshi Saifu)

### C. DOCUMENTS CONSIDERED TO BE RELEVANT

| Category* | Citation of document, with indication, where appropriate, of the relevant passages | Relevant to claim No. |
|---|---|---|
| Y | JP, 9-237298, A (Hitachi,Ltd.), 9 September, 1997 (09. 09. 97) & EP, 793186, A | 1-43 |
| Y | JP, 59-151259, A (Omron Tateisi Electronics Co.), 16 February, 1983 (16. 02. 83) (Family: none) | 1-43 |
| Y | JP, 5-120306, A (Omron Corp.), 29 October, 1991 (29. 10. 91) (Family: none) | 1-43 |
| A | JP, 63-32658, A (Casio Computer Co., Ltd.), 12 February, 1988 (12. 02. 88), (Particularly page 10, upper left column, lines 10 to 16) & US, 4839504, A | 19-27, 41 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 17 February, 1999 (17. 02. 99) | 2 March, 1999 (02. 03. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)